# EUROPÄISCHE PATENTSCHRIFT

(11) **EP 0 706 646 B1**
(45) Veröffentlichungstag und Bekanntmachung des Hinweises auf die Patenterteilung: **25.03.1998**
(21) Anmeldenummer: 94922254.1
(22) Anmeldetag: 02.07.1994
(51) Int. Cl.: G01N 1/28, B01L 3/00, B01J 19/00, G01N 30/00, C12Q 1/68

(54) **PROBENTRÄGER UND SEINE VERWENDUNG**
SAMPLE HOLDER AND ITS USE
PORTE-ECHANTILLONS ET SON UTILISATION

(30) Priorität: 02.07.1993 DE 4322147
(43) Veröffentlichungstag der Anmeldung: 17.04.1996
(73) Patentinhaber: INSTITUT FÜR MOLEKULARE BIOLOGIE E.V., 07745 Jena (DE); INSTITUT FÜR PHYSIKALISCHE HOCHTECHNOLOGIE E.V., 07743 Jena (DE); Max-Planck-Gesellschaft zur Förderung der Wissenschaften e.V. Berlin, 80539 München (DE)
(72) Erfinder: EIGEN, Manfred, D-37075 Göttingen (DE); HENCO, Karsten, D-40699 Erkrath (DE); SCHOBER, Andreas, D-99423 Weimar (DE); SCHWIENHORST, Andreas, D-37075 Göttingen (DE); KÖHLER, Michael, D-07743 Jena (DE); THÜRK, Marcel, D-37083 Göttingen (DE); GÜNTHER, Rolf, F-92330 Sceaux (FR); DÖRING, Michael, D-22851 Norderstedt (DE)
(74) Vertreter: Pfeiffer, Rolf-Gerd
(86) Internationale Anmeldenummer: EP9402173
(87) Internationale Veröffentlichungsnummer: WO9501559

(56) Entgegenhaltungen:
- EP-A- 0 359 249
- EP-A- 0 488 947
- WO-A-86/07288
- DE-A- 3 915 920
- 5TH INTERNATIONAL CONFERENCE ON SOLID-STATE SENSORS AND ACTUATORS AND EUROSENSORS III, MONTREUX, SWITZERLAND, 25-30 JUNE 1989, ISSN 0924-4247, SENSORS AND ACTUATORS A (PHYSICAL), APRIL 1990, SWITZERLAND, PAGE(S) 904 - 907 Kittilsland G et al 'A sub-micron particle filter in silicon (molecular biology application)'
- SCIENCE, Bd.251, 15. Februar 1991, LANCASTER, PA US Seiten 767 - 773 S.P.A. FODOR ET AL. 'Light-directed, spatially adressable parallel chemical synthesis' in der Anmeldung erwähnt
- SENSORS AND ACTUATORS A, Bd.A22, Nr.1-3, März 1990, LAUSANNE CH Seiten 948 - 953, XP371726 K. SATO ET AL. 'Individual and mass operation of biological cells using micromechanical silicon devices'

## Beschreibung

Gegenstand der vorliegenden Erfindung ist ein Probenträger sowie die Verwendung des Probenträgers in einem Verfahren zur parallelen Führung chemischer und biologischer Reaktionen, wie grundsätzlich aus DE-A-39 15 920 bekannt.

Bei der Suche nach neuen Verbindungen mit gewünschten Funktionen werden vermehrt nicht-rationale Verfahren der Synthese von Leitstrukturen eingesetzt, um zunächst eine große Anzahl verschiedener Strukturen zu synthetisieren. Dies betrifft die Synthese kleiner Moleküle durch chemische oder photosynthetische Verfahren wie auch die Synthese größerer biologischer Moleküle wie Peptide, Proteine, Nukleinsäuren unter Ausnutzung chemischer oder enzymatischer Reaktionsverfahren. Durch die Verfügbarkeit miniaturisierter Analyseverfahren, durch die sich die sogenannte "Fitness" eines Syntheseproduktes bezogen auf eine erwünschte Funktion feststellen bzw, quantitativ messen läßt, ist bereits die Synthese dieser Leitstrukturen im Miniaturmaßstab möglich.

Die Anforderungen gehen dabei deutlich über den mit der Mikrotitrationsplatte bereits erreichbaren Grad der Miniaturisierung und zahlenmäßigen Parallelführung von Reaktionen hinaus. Es wird vielfach angestrebt, mehr als tausend Reaktionen parallel führen zu können. Dafür müssen prinzipiell neue Konzeptionen der Vorrichtung und der Probenhandhabung realisiert werden. Hierzu bedarf es unter anderem eines Mikroreaktionsgefäßes bzw. Reaktionsräumen und einer Vorrichtung, mit der diese Mikroreaktionsräume oder -gefäße beschickt, entleert, zur Analyse und Synthese von Proben vorbereitet usw. werden. Dabei muß gleichzeitig gewährleistet sein, daß die jeweiligen Proben zuverlässig zugeordnet und wiedergefunden werden können. Um die geforderten Probenzahlen bearbeiten zu können, ist es unbedingt erforderlich, mit entsprechend kleinen Mengen und Volumina zu arbeiten.

In R. Frank, Tetrahedron Vol. 48, 42, 9217-9232, wird ein Verfahren beschrieben, nach dem es möglich ist, auf Cellulosefiltern im Spot-Verfahren Bibliotheken von festphasengekoppelten Peptiden in parallel geführten Synthesen zu erstellen, um sie anschließend einer funktionalen Prüfung zu unterziehen, z.B. der Bindung an einen Antikörper. Vergleichbare Verfahren wurden von Fodor et al. (Science 1991, 251, 767 - 773) und Geysen et al. (Proc. Natl. Acad. Sci. 1984, 81, 3998 - 4002) beschrieben. Andere Verfahren werden in einem Review (Fields et al. Int. J. Peptide Protein Res. 1990, 35, 161 - 214) diskutiert. Die Kopplungs-Chemie ist, von Variationen abgesehen, für alle Verfahren im Prinzip vergleichbar und greift auf traditionelle Verfahren bezüglich Lösungsmittel zurück. Vergleichbare Verfahren sind für die Oligonukleotid-Synthese entwickelt worden. Die Verfahren sind für einen 50 nMol-Maßstab ausgelegt. Die Spanne umfaßt einen fmol- bis µMol-Bereich. Die einzelnen Pipettierschritte umfassen zwar Volumina von 0,1 - 0,01 µl, dennoch sind diese Bedingungen noch immer überdimensioniert oder ungeeignet.

Selbst Syntheseraten im fmol-Bereich bedeuten bei einem anschließenden Test in einem Volumen von 10 µl eine Konzentration von > 10 µM, d.h. eine Konzentration, die für hochspezifische und hochaffine Bindungsassays noch zu groß sein kann. Ein weiterer Nachteil ist das Zerfließen der Tropfen. Tropfengrößen von 100 nl auf Whatman 1Chr oder Whatman 3MM generieren Spots von 3 - 4 mm Durchmesser. Bei automatischer Auftragung können kleinere Spots mit einer Dichte von 100 Spots pro cm² realisiert werden.

Die Filtertechnologie ist aber problematisch in der Handhabung und Positionierung, wenn noch höhere Spotdichten erzeugt werden sollen. Dann ist auch ein herkömmliches Pipettiersystem ungeeignet und nicht mehr hinreichend präzise, die entsprechenden Positionierungen der Proben reproduzierbar zu bewerkstelligen.

Nachteilig ist auch eine anschließende Bewertung jeder einzelnen Position auf bestimmte Eigenschaften. So ist es häufig wünschenswert, die festphasengekoppelten Syntheseprodukte in ein Reaktionsvolumen in Lösung zu entlassen, da die Festphasenkopplung häufig unerwünschte Effekte in Hinblick auf die zu analysierende Funktion ergibt. Eine Trennung der einzelnen Kompartimente ist aber auf einem flächigen Träger nicht ohne weiteres zu erreichen.

Zur parallelen Führung einer Vielzahl von chemischen und/oder biologischen Reaktionen bedarf es eines Probenträgers mit einer Vielzahl von Ausnehmungen (in dieser Beschreibung auch mit Kompartiment bezeichnet) in seiner Oberseite. Hierzu werden zweckmäßigerweise mikromechanisch hergestellte Strukturen verwendet. Ein solcher Probenträger mit mikroskopisch kleinen Ausnehmungen ist aus DE-A-39 15 920 bekannt. Die Ausnehmungen dieses bekannten Probenträgers weisen geschlossene Böden in der Unterseite des Probenträgers auf.

Der Erfindung liegt die Aufgabe zugrunde, einen Probenträger zu schaffen, der eine Vielzahl von zu untersuchenden Proben mit einem Volumen von insbesondere weniger als 10 µl aufnehmen kann und der zur quasi parallelen optischen Untersuchung und Beobachtung, zwecks Synthetisierung, Sequenzierung und Analyse seiner Proben eingesetzt werden kann.

Zur Lösung dieser Aufgabe wird mit der Erfindung ein Probenträger vorgeschlagen, der durch die Merkmale des Anspruchs 1 gekennzeichnet ist. Zweckmäßige Ausgestaltungen dieses Probenträgers sind jeweils in den Unteransprüchen angegeben. Der erfindungsgemäße Probenträger läßt sich insbesondere wie in den Verwendungsansprüchen angegeben einsetzen.

Der erfindungsgemäße Probenträger weist eine Oberseite und eine dieser abgewandten Unterseite auf. Die Böden der in der Oberseite eingebrachten Ausnehmungen sind vorzugsweise porös, und zwar entweder über den gesamten jeweiligen Bodenbereich oder über einen Teil des jeweiligen Bodenbereichs. Damit sind die Ausnehmungen oder Kompartimente durchlässig, so daß mittels Unterdruck an der Unterseite des Probenträgers die Proben aus den Ausnehmungen über deren poröse Böden abgesaugt werden können. Dies kann auch mittels Kapillarwirkung geschehen, indem die Unterseite des Probenträgers mit einer Kapillarwirkung erzeugenden Struktur für jeden Boden oder für mindestens einen bzw. einige der Böden versehen ist. Erst die Porösität oder, allgemeiner ausgedrückt, die Durchlässigkeit macht es möglich, den Probenträger für Sequenzierungszwecke und Synthetisierungszwecke sowie Analysen wirkungsvoll einzusetzen, wobei im Rahmen dieser Untersuchungen stets eine Vielzahl von parallelen Reaktionsprozessen ablaufen.

Die Porengröße der Böden ist zweckmäßigerweise derart bemessen, daß in die Ausnehmungen eingebracht Festphasen, wie sie zur Oberflächenbindung von Festphasen-Synthesen eingesetzt werden, in den Ausnehmungen verbleiben. Als Festphasen kommen beispielsweise Glasstaub oder Harze bzw. Harzpartikel in Frage. Zweckmäßigerweise erfolgt die Einbringung der Festphasenpartikel dadurch, daß eine Flüssigkeit, in der die Festphasenpartikel aufgeschlämmt sind, auf die Oberseite des Probenträgers aufgestrichen wird.

Der erfindungsgemäße Probenträger weist eine Vielzahl von Ausnehmungen bzw. Kompartimenten mit einem befüllbaren Volumen von jeweils weniger als 10 µl auf, wobei benachbarte Kompartimente bzw. Ausnehmungen voneinander einen Abstand von < 5 mm haben.

Der erfindungsgemäße Probenträger ist geeignet, eine Vielzahl von Proben in paralleler Reaktionsführung chemischer Reaktionen in flüssiger oder heterogener Phase zu bearbeiten. Dadurch werden große Zahlen parallel geführter chemischer und biologischer Reaktionen, insbesondere bei evolutiven Entwicklungsverfahren und Experimenten möglich. Unter paralleler Führung ist eine Prozessierung einer Vielzahl ähnlicher oder gleicher Reaktionstypen oder Arbeitsschritte zu verstehen, wobei die Prozessierung der Reaktionen, die den Reaktionstyp bilden, gleichzeitig oder nacheinander erfolgen kann. Die erfindungsgemäße Vorrichtung macht es möglich, kontaminationsfrei Volumina von ≤ 100 µl abzufüllen und die entsprechend abgelegten Proben zu kennzeichnen und wiederzufinden. Die erfindungsgemäße Vorrichtung bildet ein universell anwendbares Reaktions- und/oder Analysensystem, wobei die Reaktions- bzw. Analysensysteme miteinander gekoppelt sein können.

Der erfindungsgemäße Probenträger besteht in einer bevorzugten Ausführungsform aus einer Schicht eines ätzbaren Materials und weist die Kompartimente als Hohlräume in der Schicht des Materials auf. Die Kompartimente sind befüllbare Hohlräume, die in die Schicht hineinragen. Typischerweise weist ein Kompartiment umschließende Seitenwände und einen Boden auf. Die Kompartimente des Probenträgers sollten dabei vorzugsweise an einer Seite mit der umgebenen Atmosphäre in Stoffaustausch stehen oder mit einer Gasphase und/oder einer für mindestens zwei Kompartimente gleichermaßen zugänglichen flüssigen Phase in molekularem Stoffaustausch stehen. Dazu ist der Boden der Kompartimente durch eine poröse Bodenplatte gebildet.

Der Probenträger nach der Erfindung läßt sich aus den aus der Halbleitertechnik bekannten Materialien, insbesondere durch Ätzen von Silizium, sowie nach den aus der Halbleitertechnik bekannten Verfahren herstellen. Träger mit einer Vielzahl von miniaturisierten Kompartimenten bzw. Reaktionskammern ließen sich prinzipiell auch mit Hilfe der LIGA-Technik herstellen (zum Prinzip dieser Technik siehe z.B. V. Menz, P. Bley; Mikrosystemtechnik für Ingenieure, VCH 1993). Bei dieser Technik wird ein Master durch Röntgentiefenlithografie erzeugt. Nach galvanischer Abformung dieses Masters können dann Tochterelemente gepreßt oder gegossen werden. Dieses Verfahren bietet Kunststoff als Materialalternative zu den oben vorgeschlagenen Siliziumträgern. Die Anfertigung von Mastern wird im allgemeinen an einem Synchrotron-Belichtungsgerät vorgenommen, das relativ teuer ist und derzeit nur an einigen wenigen Forschungseinrichtungen zur Verfügung steht, während die Silizium- und Dünnschichttechnologie kostengünstig und gut eingeführt ist und von zahlreichen Unternehmen und Einrichtungen beherrscht wird. Die Kantenqualität der Mikrostrukturen kann sich durch die Abformprozesse vermindern. Die Integration von Dünnschichtelementen (optische Schichten, Sensoren, Aktoren) ist problematisch, während sie gut in den Rahmen der vorgeschlagenen Kombination aus Siliziumeinkristall- und Dünnschichttechnologie paßt.

Der Arbeitsablauf bei der Herstellung von Si-Kammerträgern gliedert sich wie folgt: Auf der Vorder- und Rückseite der geläppten und polierten Wafer mit einer 100-Orientierung wird ein Mehrschichtsystem bestehend aus je 2 SiO₂- und Si₃N₄-Schichten mit Einzelschichtdicken von 0,2 bis 2 µm aufgebracht. Anschließend werden Vorder- und Rückseite des Wafers mit einem Fotolack beschichtet und eine fotolithografische Maske auf den zu strukturierenden Seiten erzeugt. Im Falle der einfachen Kammerträger wird eine Maske mit quadratischen Fenstern auf nur einer Seite hergestellt, im Falle der Siebboden-Kammern wird auf der den großen Kammeröffnungen gegenüberliegenden Seite eine Maske mit mittig zu den großen Fenstern angeordneten kleinen quadratischen Felder von Porenstrukturen erzeugt. Die Abmessungen der sich gegenüberliegenden Maskenstrukturen sind dabei so bemessen, daß sich auf Grund des kristallografischen Ätzverhaltens des Siliziums und unter Berücksichtigung der Waferdicke eine Kammerform ergibt, die weitgehend einem quadratischen Pyramidenstumpf entspricht. Die Maskenstruktur wird durch sukzessive selektive Ätzprozesse zunächst in die äußere SiO₂-Schicht, danach in die darunterliegenden Schichten und anschließend in das einkristalline Silizium übertragen (zum mikrolithografischen Silizium-Tiefenätzen siehe DD-PS 300 622).

Im Falle der einfachen Kammerträger kann der Kammerboden entweder nur aus der im sichtbaren Spektralbereich transparenten SiO₂/Si₃N₄-Membran (0,8 µm dick) oder aus einer mehrere µm dicken Siliziummembran bestehen, die im IR transparent ist. Im Fall der Siebbodenkammern besteht das Bodennetz stets aus der ca. 0,8 µm dicken SiO₂/Si₃N₄-Membran. Kombinationen von Siebbödenelementen und geschlossen Böden sind möglich.

In einer bevorzugten Ausführungsform sind die Wände der Kompartimente mindestens teilweise mit einer Schicht eines inerten Materials versehen. Der Probenträger ist vorzugsweise einer gesättigten Atmosphäre ausgesetzt, um ein Verdampfen der in den Kompartimenten des Probenträgers oder, bei hydrophobem Probenkörper auf dessen Oberfläche befindlichen Lösungen zu vermeiden.

In einer bevorzugten Ausführungsform wirkt der erfindungsgemäße Probenträger mit einer Einrichtung zur Analyse der Inhalte der Kompartimente zusammen. Die Einrichtung zur Analyse ist insbesondere ein optisches Detektionssystem. Vorzugsweise handelt es sich dabei um ein CCD-System.

In einer bevorzugten Ausführungsform ist der Probenträger ein Wafer, wie er für die Halbleitertechnologie verwendet wird. Die Detektionseinrichtung ist vorzugsweise mit einem Faserbündel (faseroptische Platte) versehen, das die von dem Probenträger kommende optische Information aufnimmt und diese an einen vorzugsweise hochauflösenden CCD-Sensor weiterleitet, wobei für laseroptische Untersuchungen eine Filterschicht wie ein Metallfilm aufgedampft ist. Der Probenträger ist dabei ein eigenständiges Modul oder mit einem Probenträgerhalter fest verbunden. Die modulare Ausführungsform hat den Vorteil, daß die Probenträger schnell auswechselbar sind und sich insbesondere für den Einmalgebrauch eignen. Es ist vorteilhaft die Kompartimente gleich mit einem oder mehreren Lichtleitern auszustatten. Die Kompartimente können mit Meßeinrichtungen wie Temperaturfühler und/oder Sensoren zur pH-Messung oder CO₂-Messung etc. versehen sein, um die Reaktionen mittels bestimmter Parameter zu steuern.

Die erfindungsgemäße Vorrichtung weist vorzugsweise pro Position eines Kompartiments mehrere miteinander in Kontakt stehende Kompartimente in einer Anordnung übereinander auf, wobei die Kompartimente jeweils durch poröse Einrichtungen voneinander getrennt sind. Zur Reaktionsführung bei bestimmten Problemstellungen kann es vorteilhaft sein, in den Kompartimente ein chromatographisches Trennmaterial anzuordnen. Die Kompartimente des erfindungsgemäßen Probenträgers lassen sich von mindestens einer Seite aus mit einer (Mikro-)Dosiereinrichtung mit vorbestimmten Lösungsvolumina beladen.

Eine Mikrodosiereinrichtung und/oder der erfindungsgemäße läßt bzw. lassen sich zweidimensional (X/Y-Tisch) mechanisch über einen Rechner steuern, um die relative Positionierung von Probenträger und Mikrodosiereinrichtung zu gewährleisten. Die Mikrodosiereinrichtung weist vorzugsweise eine in ihrem Querschnitt mindestens teilweise durch piezoelektrische Einwirkung veränderbare Kapillare oder eine Vielzahl solcher Kapillaren auf. Dabei wird die Menge der jeweils im Probenträger abzulegenden Lösung, vorzugsweise rechnergesteuert, über piezo-getriggerte Tropfenzahl als ganzzahliges Vielfaches eines Einheitstropfenvolumens in das Kompartiment überführt.

Bei der Durchführung von Reaktionen in den jeweiligen Kompartimenten kann es vorteilhaft sein, dort bereits vorgefertigte Reagenzien anzuordnen.

Der erfindungsgemäße Probenträger läßt sich zur parallelen Führung von Reaktionen und/oder Analysen und/oder chromatographischen Trennungen großer Zahlen voneinander unabhängiger Reaktionsansätze mit dem Ziel der vergleichenden Analyse und/oder Kultivierung vermehrungsfähigen biologischen Materials und/oder der chemischen Synthese verwenden. Vermehrungsfähige biologische Materialien sind dabei insbesondere Viren und/oder Zellen. Es können in den Kompartimenten jedoch auch zellfreie Amplifikationen von Nukleinsäuren (PCR-Reaktionen und ähnliches) durchgeführt werden. Der erfindungsgemäße Probenträger kann aber auch zur Untersuchung der phänotypischen Eigenschaften von Mutanten, die sich jeweils in verschiedenen Kompartimenten befinden oder dort gebildet werden, verwendet werden, insbesondere kann im Hinblick auf spezifische Bindungseigenschaften oder enzymatische Eigenschaften untersucht werden. In den einzelnen Kompartimenten des Probenträgers können gezielt chemische Synthesen durchgeführt werden, insbesondere Synthesen und/ oder Modifikationen organischer Moleküle, wie Synthese von Oligopeptiden oder Oligonukleotiden auf DNA- oder RNA-Basis, wobei die Verbindung des Mikrodosiersystems mit mindestens 2 Dosierköpfen die gezielte kontaminationsfreie Zugabe von mindestens zwei unterschiedlichen Reagenzien in die Kompartimente erlaubt. Insbesondere lassen sich organische Moleküle, die biologisch aktive chemische Leitstrukturen aufweisen, positionsspezifisch in den Kompartimenten mit verschiedenen Substanzen und/oder Substanzgemischen zur Reaktion bringen und die dabei entstehenden unterschiedlichen Reaktionsprodukte auf bestimmte Eigenschaften analysieren.

Ferner betrifft die Erfindung eine Vorrichtung zur Aufnahme einer Vielzahl von chemischen und/oder biologischen Proben. Der hierzu vorgesehene Probenkörper weist eine Vielzahl von Kompartimenten (Reaktionskammern) zur Aufnahme der Proben auf. Ferner ist der Probenkörper mit mindestens einer Schicht aus einem ätzbaren Material versehen, in die mittels eines lithografischen Prozesses die Kompartimente oder Reaktionskammern bildende Hohlräume ausgebildet sind.

Der Abstand der Öffnungen benachbarter Kompartimente ist vorzugsweise kleiner als oder gleich 5 mm.

Die mindestens eine Schicht aus ätzbarem Material besteht vorzugsweise aus Silizium bzw. weist Silizium auf.

Alternativ können die Hohlräume in dem Probenkörper auch mit Hilfe der LIGA-Technik hergestellt werden; in diesem Fall besteht der Probenträger aus einem Kunststoffmaterial.

Eine weitere Variante des Probenträgers bezieht sich darauf, daß zur Aufnahme der Proben keine Vertiefungen o.dgl. in die Oberfläche des Probenträgers eingearbeitet sind, sondern daß der Probenträger hydrophobe Bereiche aufweist, auf die die Proben appliziert werden. Es ist denkbar, daß der Probenträger in den Bereichen seiner hydrophoben Zonen Vertiefungen aufweist. Die hydrophoben Bereiche sind vorzugsweise an der Oberfläche des Probenträgers vorgesehen. Der Probenträger weist zweckmäßigerweise eine scheiben- oder plattenähnliche Struktur auf.

Gerade die Kombination von Mikropipette/Microdrop und lithografisch gefertigten Probenträgern erlaubt die Weiterentwicklung der Relaxationsmethoden. Das bedeutet das Vermessen kleinster Volumina bei hohen Feldstärken aber kleiner Spannung (z.B. mit der Beziehung für die Feldstärke E = U/d, einen Abstand von d = 10 µm und einer Spannung von 10 V ergibt sich eine Feldstärke von 10 Kv/cm.

Folgende Methoden sind einsetzbar, um dielektrische Relaxation quantitativ vermessen zu können:
1. Kapazitätsänderung der Kammer
2. Optische detektierbare Veränderung (Fluoreszenz, Absorption)

In den klassischen Methoden (T-Sprung, Feldsprung, Drucksprung etc.) kommt ausschließlich der optische Nachweis zur Anwendung, weil die Kapazitätsänderung in den üblichen großen Volumina zu klein wäre, um detektierbar zu sein. Dies ist aber bei Miniaturisierung aufgrund kleiner Raummaße möglich, wie in PCT/EP94/00117 beschrieben (mit der Beziehung für einen einfachen Plattenkondensator C = ε₀εᵣ A/d mit A als Fläche, d Abstand der Kondensatorflächen, ε₀ Dielektrizitätskonstante im Vakuum, εᵣ relative Dielektrizitätskonstante (stoffabhängig, dimensionslos) ergibt sich ein Unterschied um den Faktor 1000 in der Kapazität bei einem Volumen von 1 ml (1 cm³) im Vergleich zu einem 1 pl (10 µm³).

Die erfindungsgemäße Vorrichtung läßt sich insbesondere zur Durchführung chemischer Relaxationsmethoden, insbesondere Drucksprung, Feldsprung und Temperatursprung verwenden.

Der erfindungsgemäße Probenträger macht es möglich, parallel eine Vielzahl von chemischen und biologischen Reaktionen ablaufen zu lassen. Durch die Verfügbarkeit miniaturisierter Analyseverfahren, durch die sich die sogenannte "Fitness" eines Syntheseproduktes bezogen auf eine erwünschte Funktion bzw. Zielkategorie feststellen und quantitativ messen läßt, ist bereits die Synthese in Miniaturmaßstab möglich. Der erfindungsgemäße Probenträger läßt sich gerade für derartige Syntheseverfahren einsetzen. Die Struktur einer solchen Fitnesslandschaft einer (un-)bekannten biologischen oder biochemischen oder chemischen Substanz, deren genaue Funktion unbekannt, aber deren gewünschte Zielkategorie (z.B. besser an eine andere Substanz zu binden) definiert ist, ist ebenfalls nicht bekannt oder verfügbar. Das nachfolgend vorgestellte Optimierungsverfahren kann genau diese Aufgabe erfüllen; es kann nämlich Strategien für Optimierung auf unbekannten Fitnesslandschaften vorschlagen und damit den Mitteleinsatz zusätzlich zur Miniaturisierung erhöhen. Dieses Optimierungsverfahren wird weiter unten am Beispiel einer Standardsynthese noch näher beschrieben.

Der erfindungsgemäße Probenträger kann aber auch bei Verfahren zur Fitnessoptimierung beliebiger Bakterienpopulationen benutzt werden. Es lassen sich Sequenzabschnitte randomisieren, wobei über den Essay gelernt wird und stets dasselbe wiederholt wird. Dabei wird die MEM eingesetzt. Die hierzu notwendigen Oligosynthesen werden in deterministischer Weise allerdings in erheblich höherer Zahl hergestellt und in die entsprechenden Bakterien hineinkloniert.

Nachfolgend werden anhand der Figuren Ausführungsbeispiele der Erfindung näher erläutert. Im einzelnen zeigen:
- Fig. 1: schematisch den Probenträger und eine faseroptische Platte mit mit dieser gekoppelter CCD-Einrichtung,
- Fig. 2: ebenfalls schematisch die Aufbringung der Proben mit einem Mikrodosiersystem (Microdrop),
- Fig. 3: die Anordnung eines Zweifach-Mikrodosiersystems zur getrennten Abgabe zweier unterschiedlicher Proben, Reagenzien oder sonstiger Substanzen,
- Fig. 4: schematisch den Probenträger mit optischer Anregung der von diesem aufgenommenen Proben, wobei die Beobachtung der Proben über Lichtleiter und einen Detektor erfolgt,
- Fig. 5: ein Beispiel für einen Probenträger (ausschnittsweise Darstellung),
- Fig. 6: stark schematisiert mehrere übereinander angeordnete Probenträger, ebenfalls ausschnittsweise dargestellt,
- Fig. 7: eine schematische Darstellung einer Chromatographie mittels der erfindungsgemäßen Vorrichtung,
- Fig. 8: eine Draufsicht auf eine Vorrichtung, in der der Probenträger eingesetzt werden kann,
- Fig. 9: eine schematische Darstellung eines Systems, in dem der Probenträger einsetzbar ist,
- Fig. 10: ein Mikrodispensersystem, mit dem sich Proben auf den Probenträger applizieren lassen,
- Fig. 11: einen Ausschnitt des Probenträgers zur Darstellung einer Kammer, eines Kompartiments bzw. einer Ausnehmung des Probenträgers, wobei Fig. 11a eine schematische Darstellung, Fig. 11b eine mikroskopische Aufnahme einzelner Kammern und Fig. 11c ein Probenkammer-Array zeigt,
- Fig. 12a: ein schematisches Beispiel einer Ausnehmung im Probenträger mit Siebboden,
- Fig. 12b: eine mikroskopische Aufnahme einer Ausnehmung mit Siebboden eines Silizium-Wafers,
- Fig. 12c wie Fig. 12b,: jedoch unter einem Winkel von ca. 15° zur Normalen,
- Fig. 13: prinzipiell die Verschiebbarkeit der Mikrodosiervorrichtung relativ zum den Probenträger haltenden Probenträgerhalter,
- Fign. 14 bis 31: Ausführungsbeispiele für die Ausbildung der Ausnehmungen und Böden eines Probenträgers, jeweils anhand einer schematischen Darstellung eines Kompartiments bzw. einer Ausnehmung, wobei die Fign. 29 bis 31 genauere Darstellungen des in Fig. 28 eingekreisten Bereiches A der Abdeckung des Probenträgers sind,
- Fign. 32 bis 38: Ausführungsbeispiele für die zur Lichteinkopplung und/oder Lichtauskopplung vorgesehenen Linsenarrays und
- Fig. 39: ein Flußdiagramm einer automatisierten Peptid-Synthese.

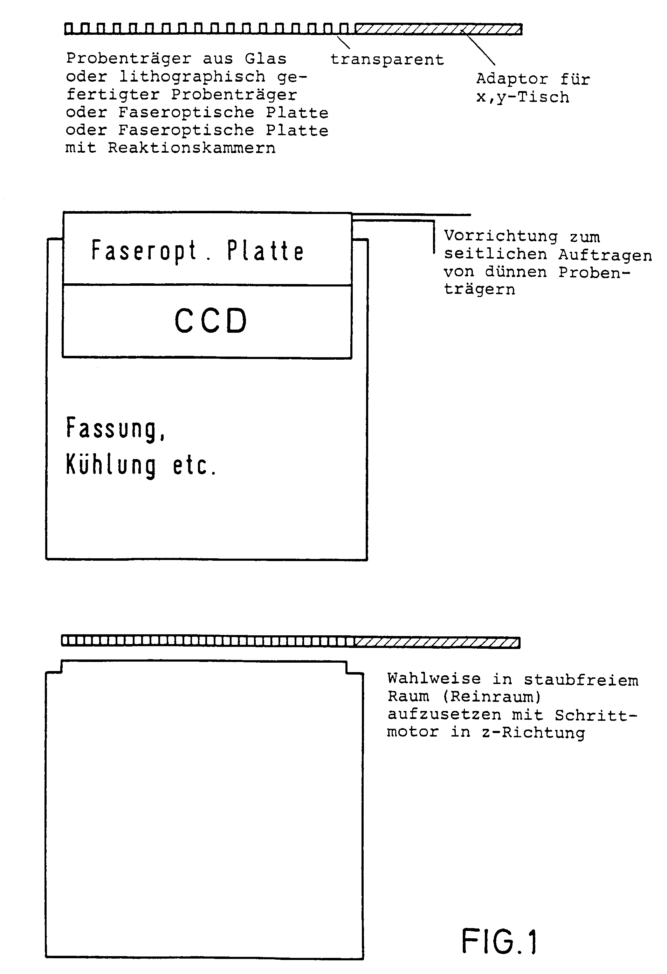

Fig. 1 zeigt schematisch einen Probenträger und eine faseroptische Platte, die mit einer CCD-Einrichtung gekoppelt ist.

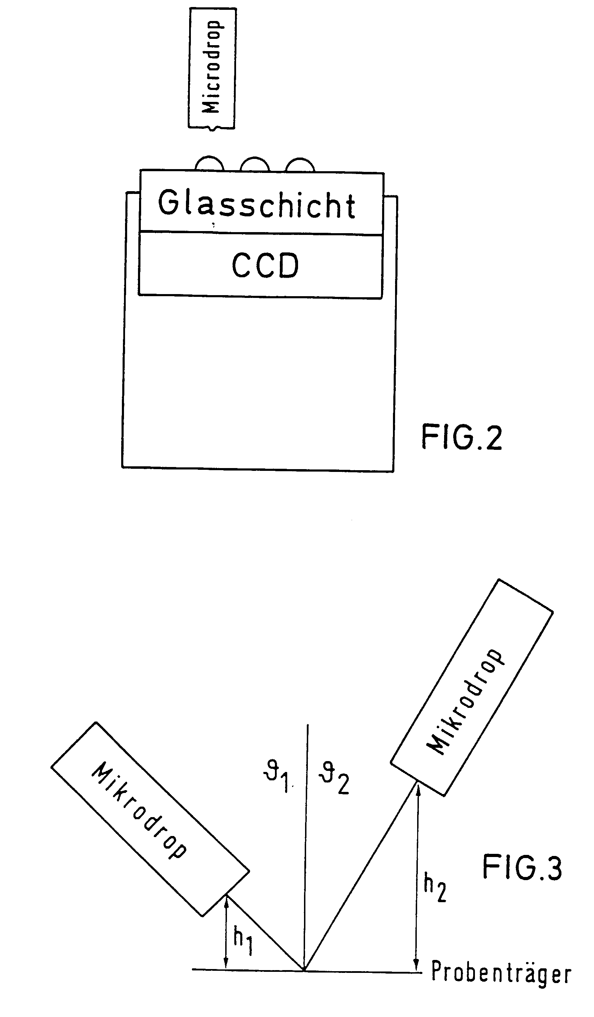

Die Fig. 2 zeigt schematisch, wie mit dem Mikrodosiersystem (Microdrop) die Proben direkt auf die Glasschicht einer CCD-Anordnung aufgetragen werden, wodurch geringer Intensitätsverlust bewirkt wird. Die Oberfläche der CCD ist aus Gründen der Inertheit noch mit einer dünnen Glasschicht versehen. Integriert werden können ferner Temperier- und Isolierschichten.

Fig. 3 zeigt schematisch die Anordnung des Mikrodosiersystems, und zwar ein Beispiel für die Anordnung von zwei Mikrodosiersystemen unter einem Winkel untereinander, d.h. unter einem spitzen Winkel zur Senkrechten zum Probenträger. Folgende Fälle können unterschieden werden:
a) θ₁ = θ₂, h₁ = h₂
b) θ₁ ≠ θ₂, h₁ = h₂
c) θ₁ ≠ θ₂, h₁ ≠ h₂

Mehrere Mikrodosiersysteme können hilfreich sein zur schnellen Beschickung, oder um empfindliche Reaktionen erst durch Aufbringen der Reaktanten am Reaktionsort zu starten. Auch lassen sich so Konkurrenzreaktionen mit der umgebenden Atmosphäre vermeiden.

Die beiden Mikrodosiersysteme (Microdrop) können auch senkrecht zum Probenträger in verschiedenen Höhen (h₁ ≠ h₂) oder in gleichen Höhen (h₁ = h₂) angeordnet sein.

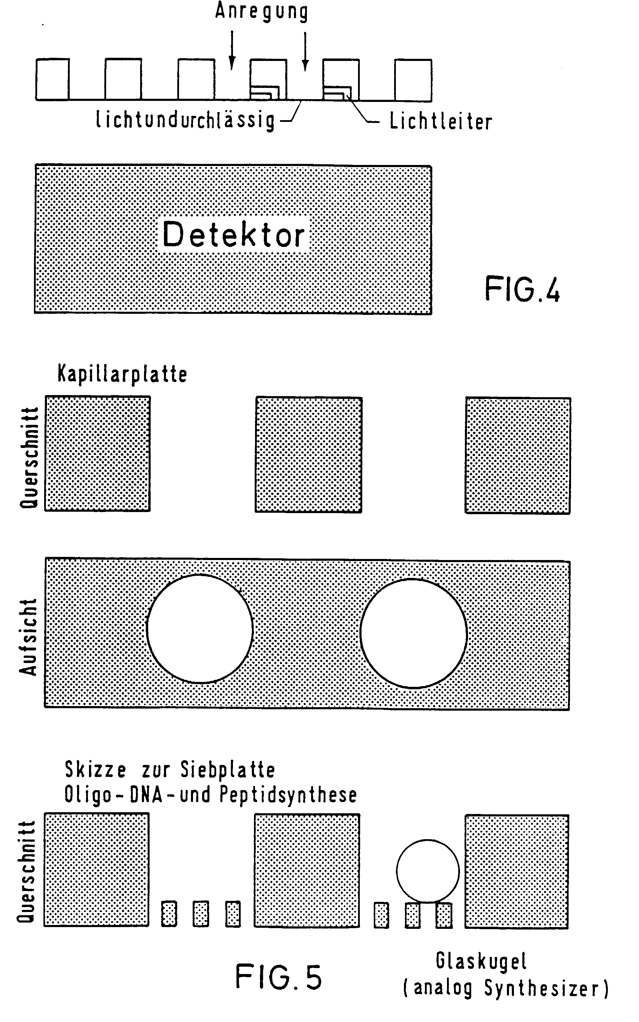

Fig. 4 zeigt schematisch, wie die Detektion auch über integrierte Lichtleiter im Probenträger möglich ist.

Fig. 5 zeigt schematisch eine bevorzugte Ausführungsform des Probenträgers. In einer Siebplatte werden kugelförmige oder faserartige Supports mit aktivierter Oberfläche analog zur Standardsynthese am Synthesizer in die einzelnen Reaktionskammern aufgebracht:

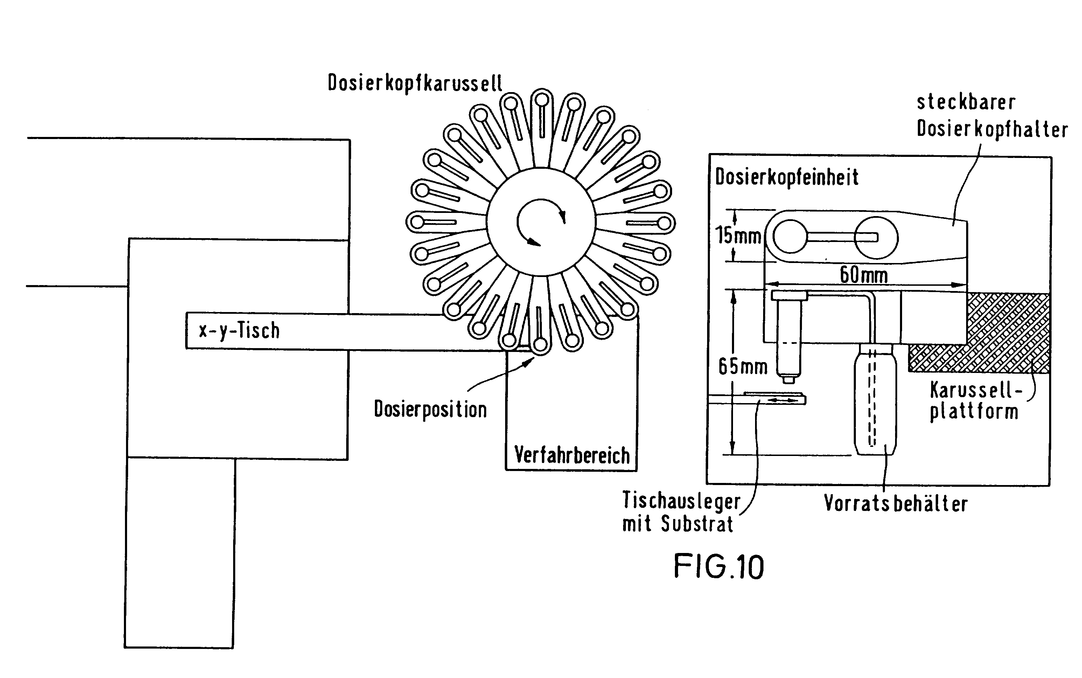

Die Synthese wird durch das Pipettieren verschiedener Lösungen mit Hilfe des Dosierkopfkarussels dem Protokoll entsprechend gestartet (siehe auch Fig. 10). Die einzelnen Positionen werden durch den (x,y)-Tisch angefahren.

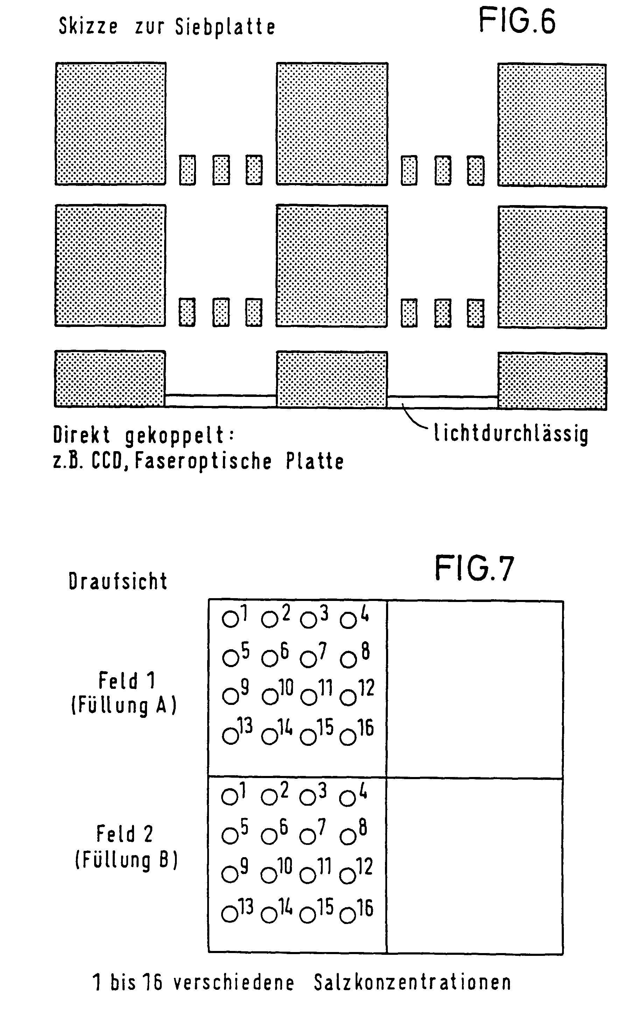

Fig. 6 zeigt schematisch, wie zur Fraktionierung die zwei oder noch mehr Siebplatten übereinander angeordnet werden können, wobei benachbarte Siebbodenplatten mittels Wafer-Wafer-Bondens verbunden werden.

Die Produkte können über integrierte Sensoren z.B. Lichtleiter oder direkt mit einer CCD beobachtet werden. Zusätzlich ist das Beobachten der obersten Siebplatten mit einer CCD und einem Mikroskop möglich.

Fig. 7 beschreibt die Möglichkeit der Chromatographie mit der erfindungsgemäßen Vorrichtung in schematischer Form.

Die Kapillarplatte (Probenträger) oder Chip wird mit verschiedenem Säulenmaterial beladen. Diese Platte wird nun mit einem Protein beladen, wobei getestet wird, in welchem Kanal das Protein zurückgehalten wird, also bindet.

Weitere Einsatzmöglichkeiten sind wie folgt:

Mehrere Chips obiger Konfiguration können mit Protein unterschiedlicher Salzkonzentration beladen werden. Dadurch wird getestet, bei welchem Material und welcher Salzkonzentration das Protein eluiert oder gebunden bleibt.

Es werden auf einem Chip 'Felder' definiert, d.h. mehrere Reaktionskompartimente werden mit gleicher Füllung beschickt, das Protein wird dann in verschiedenen Salzkonzentrationen auf verschiedene Kompartimente geladen.

### Affinitätstest:

Ebenso können beliebige Substanzen X" in Kapillarplatten immobilisiert werden. Im Fluß werden die, diese substanzenbindende Substanzen y, bis y" beladen. Die erfolgte Bindung wird durch das Messen des durchkommenden Anteils der y, bis y" Substanzen gemessen.

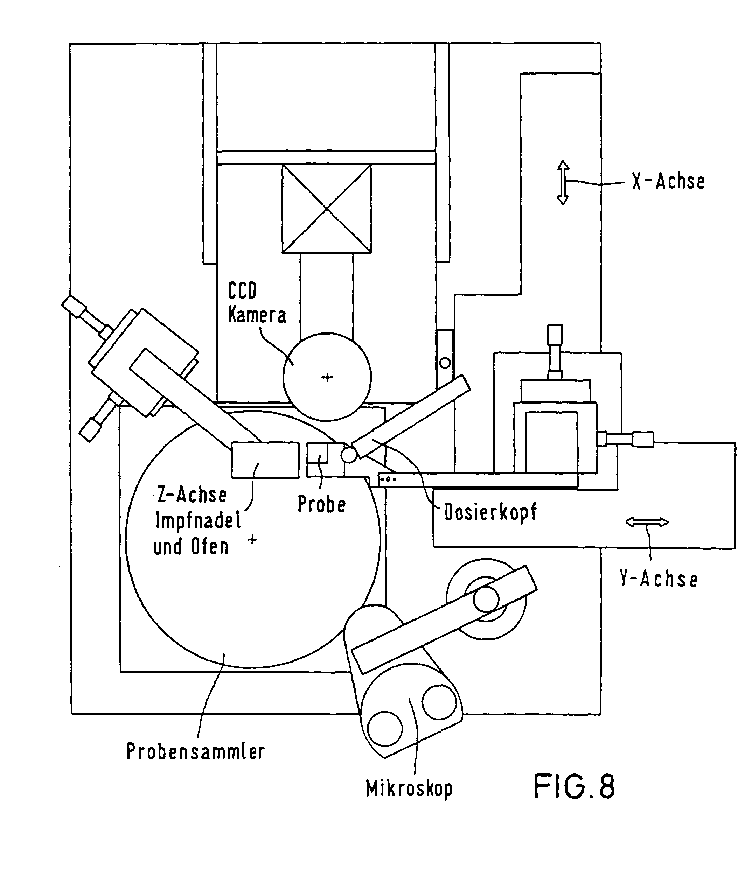

Fig. 8 zeigt einen bevorzugten Aufbau des Systems aus Beobachtungseinheit CCD-Kamera Dosiersystem, (x,y)Tisch mit Probenträgerhalter, Entnahmeposition (Impfnadel) mit Dekontaminationsofen und einem Mikroskop zur Kontrolle.

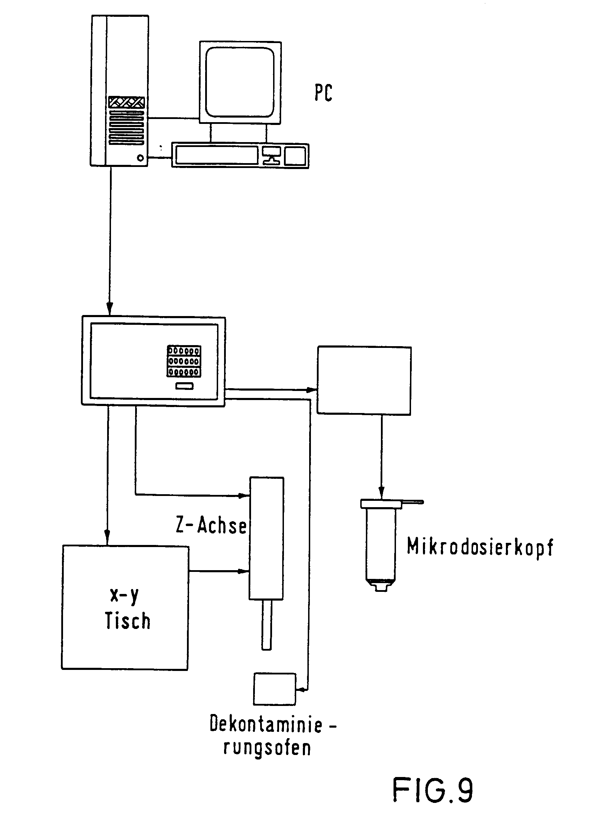

Fig. 9 zeigt ein Schema der Komponenten einer bevorzugten Ausführungsform der erfindungsgemäßen Vorrichtung und ihrer Steuerung.

Fig. 10 zeigt den Aufbau des Dosierkopfkarussells (Mikrodispersiersystem) mit (x,y)-Tisch:

Die Dosierkopfhalterungen werden in die entsprechenden Passungen im Kopfkarussell eingesetzt. Dabei kann die elektrische Verbindung gleich mit hergestellt werden. Durch Verdrehen des Karussells werden die Dosierköpfe nacheinander an die Dosierposition gebracht.

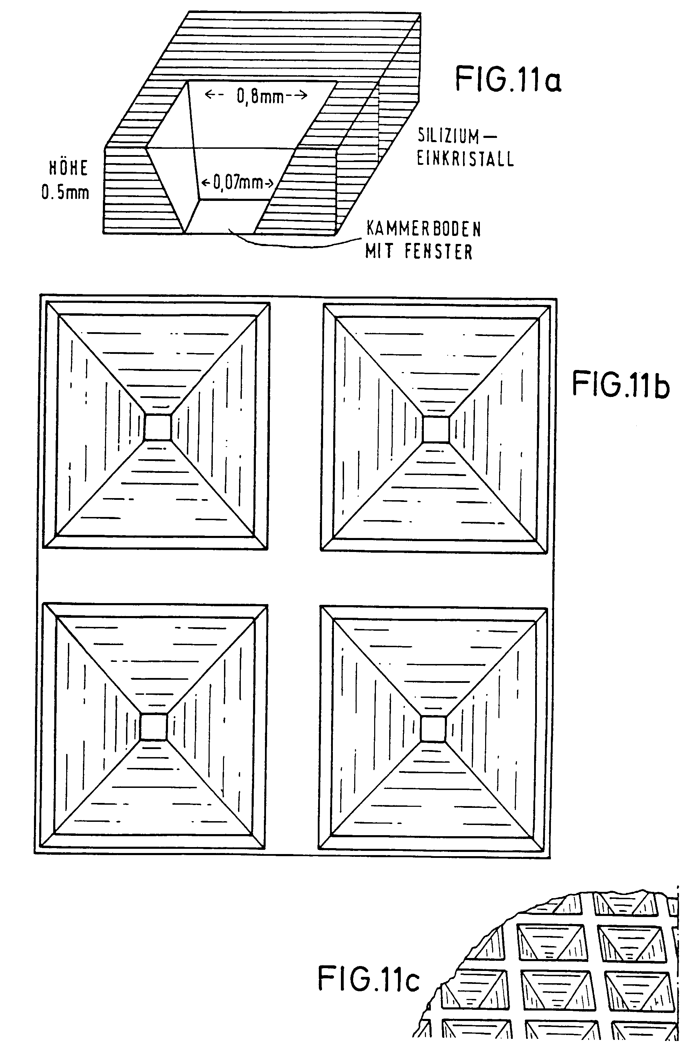

Fig. 11 zeigt Beispiele der Probenkammern in Siliziumtechnik:
a) Schema
b) Mikroskopische Aufnahme einzelner Kammern mit Sichtfenster
c) Probenkammerarray

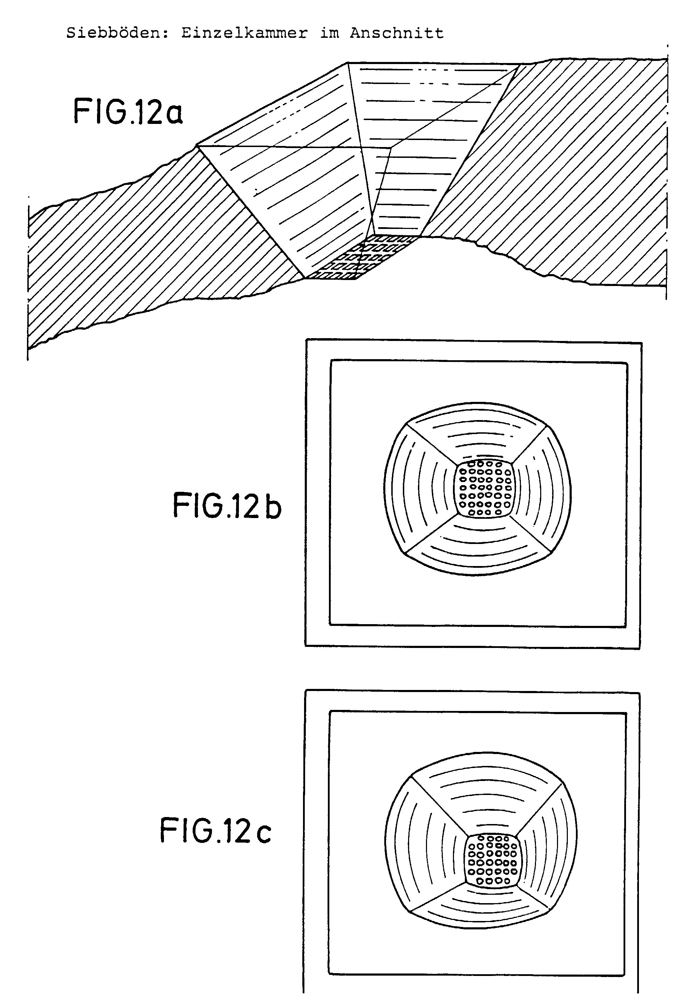

Fig. 12a zeigt ein schematisches Beispiel eines Kompartiments (Siebkammer),in einem Siliziumträger.

Fig. 12b ist eine mikroskopische Aufnahme einzelner Siebkammern unter 0° (linker Teil) und unter 15° Sichtwinkel (rechter Teil).

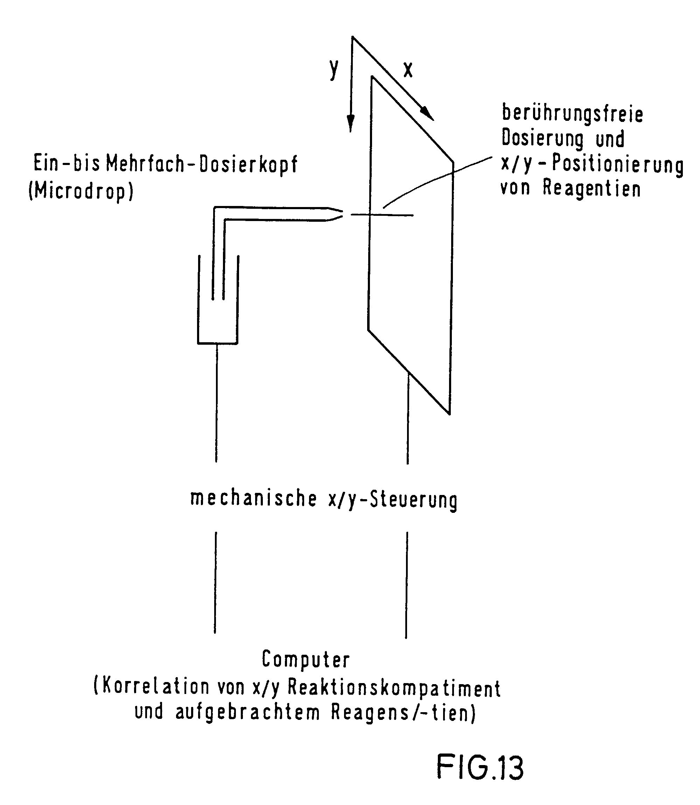

Fig. 13 zeigt nochmals prinzipiell die Verschiebbarkeit der Mikrodosiervorrichtung relativ zum ebenfalls verschiebbaren Probenträgerhalter, vorzugsweise jeweils in x/y-Koordinaten. Mit dieser Vorrichtungsanordnung lassen sich in die in Zeilen und Spalten angeordneten Kompartimente des Probenträgers berührungslos Mikro-Proben einbringen.

Anstelle einer x/y-Steuerung von Mikrodosiervorrichtung und/oder Probenträgerhalter ist es auch möglich, beide Einheiten nach Art eines Plattenspielers relativ zueinander bewegt zu steuern. Die Kompartimente, die bei einer x/y-Steuerung vorzugsweise in Spalten und Zeilen angeordnet sind, sind beim "Plattenspieleraufbau" in konzentrischen Kreisen oder längs einer Spirale in dem Probenträger angeordnet. Die Mikrodosiervorrichtung wird bei rotierendem Probenträger vorzugsweise radial zu diesem bewegt. Die Bewegung der Mikrodosiervorrichtung und die Abgabe der Mikro-Proben erfolgt synchron zur Rotationsbewegung des Probenträgers bzw. -halters.

Die vorliegende Erfindung betrifft unter anderem eine Kombination aus einem Probenträger gekoppelt mit einem äußerst effizienten Mikrodosierungssystem (Pipettiersystem). Zum Zweck der Analyse kann ein Auswertesystem angekoppelt werden, vorzugsweise in Kombination mit einer CCD-Kamera. Es handelt sich um ein neuartiges System für Probenträger zur Aufnahme flüssiger Reaktionskompartimente, wobei die einzelnen Probenvolumina ≤ 10 µl, vorzugsweise 1 µl, betragen. Erfindungsgemäß ist die Probenträgertechnik mit einem System der Einzelprobenbeschickung kombiniert, das auf einem piezogesteuerten Dispenserprinzip beruht, wobei die Flächenpositionierung (x/y-Positionierung) mit einer Genauigkeit in einer Größenordnung von mindestens 10 µm mechanisch erfolgt. Die erfindungsgemäße Vorrichtung kombiniert somit neuartige Probenträger mit einer Vielzahl mechanisch gegeneinander abgegrenzter Kompartimente, deren relative zweidimensionale Anordnung nach einem festgelegten Muster erfolgt, wobei die Kompartimente bevorzugt nach einem lithographischen Verfahren in einem Basisträger generiert werden. Ein piezo-gesteuertes Mikrodispensiersystem als "Pipettiersystem" für Probenvolumina ≥ 5 pl mit einer Dosierungenauigkeit ≤ 5 % bei einer minimalen Tropfengröße von 5 pl und ein mechanisches Positioniersystem, das die gepulst verschossenen Mikrotröpfchen auf ein dafür vorgesehenes Reaktionsfeld computergesteuert positioniert.

In einer bevorzugten Ausführungsform ist eine Detektions- und Auswerteeinheit unmittelbar mit dem erfindungsgemäßen System verkoppelt, vorzugsweise über eine CCD-Kamera. Die erfindungsgemäße Vorrichtung erlaubt die parallele Analyse insbesondere unterschiedlicher Mutanten, wie sie bei Arbeiten zur evolutiven Optimierung von Biopolymeren entstehen.

Die Vorrichtung erlaubt die Durchführung eines Verfahrens zur Durchmusterung großer Populationen von vereinzelten Bakterien mit den vorher beschriebenen Eigenschaften. Zum Optimieren einer Eigenschaft, die beispielsweise durch ein 'Gen, der Länge 10 kodiert wird, ergibt dies durch Permutation 4¹⁰ ca. 1.000.000 Möglichkeiten, die zu analysieren sind. Andererseits ermöglicht die Vorrichtung die Synthese einer Vielzahl unterschiedlicher Oligomere im Bereich der Nukleotidsynthese oder der Peptidsynthese an festen Trägern oder in homogener Phase.

Bei Verwendung eines Mehrkanalpipettierkopfes lassen sich positionsspezifisch unterschiedliche Syntheseblöcke wie die vier aktivierten Nukleotidbausteine G,A,C,T oder G,A, C,U oder Synthone verschiedener Aminosäuren in zuvor am Rechner festgelegter Weise auf die jeweils gewählten Positionen des Probenträgers aufbringen, um positionsspezifisch definierte Oligomere zu synthetisieren und nachfolgend zu testen bzw. präparativ darzustellen.

Außer oligomeren Strukturen lassen sich auch organische Moleküle synthetisieren, bei denen es auf eine Herstellung geringer Mengen umfangreicher Kollektive von Strukturalternativen ankommt. Dies ist beispielsweise bei der Analyse von Derivaten der Fall, die in Form modifizierter Leitstrukturen generiert werden, wenn z.B. biologisch aktive Verbindungen optimiert werden sollen. Im Bereich der pharmazeutischen Chemie müssen Leitstrukturen oftmals hinsichtlich einer größeren Anzahl von Parametern optimiert werden neben einer reinen pharmakologischen Aktivität. Dies betrifft z.B. die Aufnahmezeit, die biologische Halbwertszeit, Toxizität der Abbauprodukte, Membrandiffusionseigenschaften etc. Anstelle gezielter Synthesen werden in der Zukunft vermehrt komplexe Gemische synthetisiert werden, sofern entsprechende Assays für die Detektion der gewünschten Eigenschaften bereitstehen und sofern die molekularen Strukturen mit verbesserten Eigenschaften in einfacher Weise ermittelt werden können.

Bei der sogenannten AFFYMAX-Technik mit positionsspezifischen Licht-induzierten Kopplungsreaktionen (S.P.A. Fodor et al. (1991) Science 767 - 773) läßt sich eine spezifische Verbindung eindeutig aus ihrer jeweiligen x/y-Position bestimmen. Die Methode ist jedoch aus verschiedenen Gründen in ihrer Anwendungsbreite limitiert. Sie ist z. B. auf photoaktivierbare Kopplungsreaktionen beschränkt und erfordert umfangreiche Zwischen- und Waschschritte bei jeder Reaktion, da alle Reaktionspositionen jeweils mit allen Reagentien in Kontakt kommen. Darüberhinaus muß die sequentielle Durchführung der Reaktionen bei Verwendung unterschiedlicher Reagentien pro Reaktionsschritt als Nachteil angesehen werden.

Bei dem vorliegenden erfindungsgemäßen Verfahren kommen jeweils nur die vorgesehenen Positionen mit den jeweiligen Reagentien in Kontakt. Deshalb lassen sich die Reaktionen parallel durchführen. Pro Position können ein Reagens oder auch ein Reagensgemisch zugesetzt werden. Das Gemisch kann dabei bereits im aufgetragenen Tropfen (Mikrodrop) vorliegen oder es kann hergestellt werden, indem aus verschiedenen Vorlagen unterschiedliche Reagentien oder Reagentiengemische auf eine Position aufgetragen und dabei gemischt werden. Chemische Ausgangsprodukte lassen sich in aufeinander folgenden Schritten in den erfindungsgemäßen Probenkammern verbringen oder auf ebenen Flächen mit Hilfe der Dünnschichttechnik auftragen. So ist es möglich, vielfältige Synthesen vorzubereiten und zu einem beliebigen, späteren Zeitpunkt durch Aufbringen von geeigneten Lösungsmitteln für die vorgelegten, eventuell lyophilisierten Reaktanden oder Reaktionslösungen bzw. die Reaktion thermisch oder photochemisch zu starten.

Es ist möglich, durch Grenzflächenreaktionen durch Spinoff-Technik auf die Mikroreaktor-Arrays Ausgangssubstanzen aufzubringen. Umständliche präparative Schritte können so bei Verwendung der Probenträger durch vorheriges Aufbringen der Ausgangssubstanzen erspart werden. Auch Biopolymere lassen sich unter Zusatz von Stabilisatoren wie bestimmten Zuckerverbindungen selbst in lyophilisierter Form stabilisieren.

Dies führt zur Zeit- und Arbeitsersparnis beim Anwender. Darüberhinaus erlaubt diese Technik auch weniger gut ausgestatteten Labororatorien, aufwendige Synthesen durchzuführen. Lediglich ein Dispenser-System, mit dem Mikromengen an Lösungsmittel auf die (x,y)-Anordnung der Wafer verteilt werden kann, und eine entsprechende (x,y)-Verschiebeeinheit muß vorhanden sein, um bestimmte Reaktionen zu starten.

Durch den Einsatz der Planartechnik (z.B. Si-Technik, DS-Technik) bei der Herstellung der Mikrostruktur-Arrays wird das Design solcher Arrays gut kompatibel zu den bekannten Verfahren der Mikrosensorik, Mikroaktorik.

Die Einführung der Sensoren in jedem einzelnen Kompartiment ist prinzipiell möglich (siehe Lichtleiter in Silizium: J. Müller Integrierte Optik auf Silizium im Abschlußbericht des VDI/VDE Verbundprojekts Entwicklung eines CMOS - kompatiblen Gesamtprozesses zur Herstellung integriert optoelektronischer Schaltungen auf Silizium (1989); Biosensoren: Scheller, Frieder, Schubert Florian Biosensoren Akademie - Verlag Berlin 89, BioTec (Informationstransfer der BioTec) Biosensoren, Literaturdokumentation von Kathrin Stein u. Klaus-Dietrich Neumann, Vogel Verlag, 91 Würzburg).

### Einsatz als Mikro-Bioreaktor System

Die erfindungsgemäße Vorrichtung erlaubt die Fraktionierung und Analyse von eukaryotischen Zellen bzw. deren Produkte nach Größe und Affinität. Es ist ferner möglich, Infektionen der eukaryotischen Zellen in geeigneter Weise zu verfolgen, Viruspartikeln oder Proteine oder andere Biomoleküle bestimmter Anzahl zu fraktionieren und ortsspezifisch zu applizieren.

Dies wird durch die erfindungsgemäße Vorrichtung in ihrer bevorzugten Ausführungsform ermöglicht: Probenkammern mit integrierter Membran bzw. Siebstruktur, die sich z.B. lithographisch herstellen läßt, ermöglichen den Aufbau von übereinander gestaffelt angeordneten Probenkammern vorzugsweise unterschiedlicher Siebstruktur und Porengröße (siehe Fign. 6, 12a-c). Pro Kammer der obersten Anordnung lassen sich eukaryotische Zellen vereinzeln, welche direkt oder nach einer Züchtungsphase in Kontakt mit Medium von oben mikroskopisch oder fluorimetrisch vermessen werden können. Werden die Zellen z.B. mit einem Virus infiziert, können spezifische Veränderungen verfolgt werden, z.B. eine Lyse. Bestimmte Stoffwechselprodukte lassen sich z.B. durch nachfolgendes Absaugen mittels der Siebe auftrennen und detektieren. Die einzelnen Siebe können dabei auch chromatographische Trennphasen darstellen.

### Bakterien, Lumineszenz - Detektion:

In ein Reportergen (z.B. Luciferase) wurde ein Gruppe 1-Intron insertiert. Im Bakterium (E. Coli) wird nach Splicen durch die entsprechende Ribozymaktivität eine funktionstüchtige mRNA erzeugt, das für die Luciferase kodiert. Die Effizienz des Prozesses wird an der Intensität der durch die Luciferase vermittelten Bioluminiszenz gemessen.

Ein Reportergen wird zusammen mit einem Plasmid, das ein Ribozym kodiert, das spezifisch mRNA eines Reportergen erkennt und schneidet, in ein Bakterium kloniert. Schneidet das Ribozym korrekt, entsteht ein inaktives Reportergen; schneidet es dagegen nicht, ist das Reportergen aktiv und kann über das entstehende Lumineszenz Signal z.B. von einer CCD-Kamera erfaßt werden.

Temperaturresistente RNA-Polymerase (in vitro) Qβ-RNA-Sequenzen, die alle für die Replikation wichtigen Strukturen und das aktive Cistron für die Qβ-Replikase enthalten, sollten in ihrer Temperaturstabilität erhöht werden. Zusammen mit einem in vitro Translationssystem und einer anfangs zugegebenen Replikase werden durch sogenannte Serial-Transfer-Experimente temperaturstabile Replikasen gezüchtet. Serial-Transfer-Experimente bedeuten ein konzentrationsabhängiges Überimpfen selektierter Proben und Verdünnen auf neue erfindungsgemäße Probenträger die in diesem Fall mit einer Temperiervorrichtung ausgestattet sind. Durch Anlegen eines Temperaturgradienten von Platte zu Platte oder innerhalb einer Platte lassen sich die Temperaturbedingungen gezielt festlegen.

Mit Dünnschicht- bzw. klassischer Chiptechnologie lassen sich Probenträger mit integrierten Temperatursensoren, Heizvorrichtungen bis zu Lichtleitern oder photoempfindlichen Strukturen herstellen (siehe S. Büttgenbach, Mikromechanik, Teubner 91; W.M. Moreau, Semiconductor Lithography, Plenum Press 88; Micro Systems Proceedings, Bände 90/91/92, Herbert Reichl Editor; Köhler, M.: Bridges of Metallic and Dielectric Films in the Micron and Submikron Range). Damit ist es möglich, in sehr kleinen Dimensionen (gl - pl - Bereich) Experimente durchzuführen, die das Durchmustern großer Probenzahlen erlaubt. Dies ermöglicht auch die Durchführung temperaturgesteuerter Experimente. Eingebaute Sensoren erlauben darüberhinaus die chemische Analyse der Produkte (Physikalische Sensoren: Temperatur, Licht (online); chemische Sensoren: Schichten mit Nachweisreagentien).

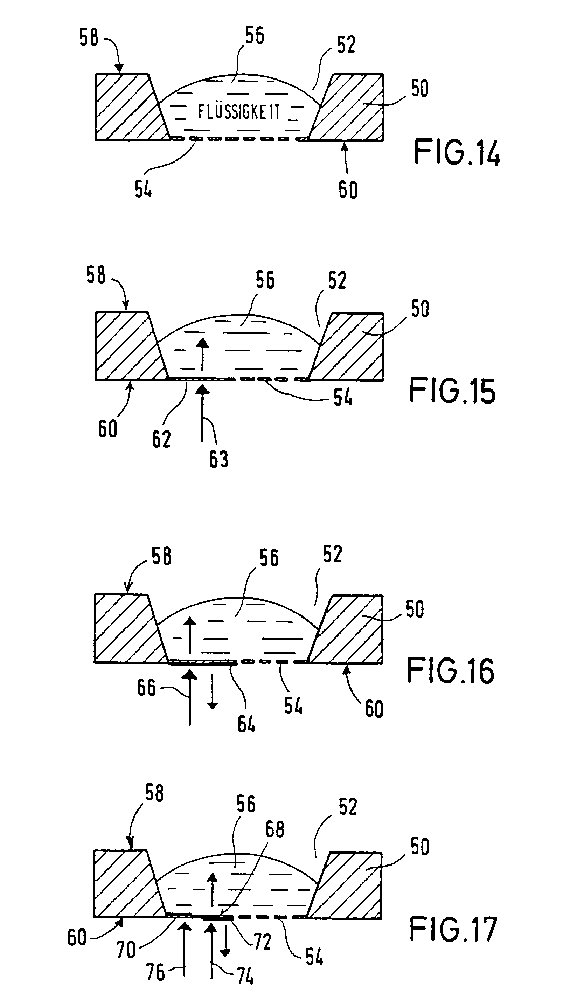

Nachfolgend soll anhand der Fign. 14 bis 31 auf einzelne Ausführungsbeispiele des Probenträgers eingegangen werden. In diesen Figuren ist die Ausbildung des Probenträgers anhand einer Ausnehmung desselben dargestellt. Für die Fign. 14 bis 31 gilt, daß der Probenträger (Silizium-Wafer) mit dem Bezugszeichen 50 bezeichnet ist, eine in diesem Probenträger 50 ausgebildete Ausnehmung mit 52 bezeichnet ist und der Siebboden der Ausnehmung 52 mit 54 gekennzeichnet ist. Teilweise ist in den Figuren bei 56 eine von der Ausnehmung 52 aufgenommene Flüssigkeitsmenge dargestellt.

Anhand von Fig. 14 soll kurz auf die Dimensionierung eines hier beispielhaft gezeigten Probenträgers 50 eingegangen werden. Der Probenträger 50 ist scheibenförmig ausgebildet und kann eine Gesamthöhe (Erstreckung zwischen Oberseite 58 und Unterseite 60) zwischen etwa 30,3 bis 3300 µm aufweisen. Die Höhe einer Ausnehmung 52, d.h. der Abstand zwischen der Oberseite 58 und dem Siebboden 54 kann zwischen etwa 30 und 3000 µm betragen. Die Dicke des Siebbodens 54 kann damit zwischen etwa 0,3 bis 300 µm liegen. Die Porenweite im Siebboden 54 kann ca. 0,2 bis 200 µm betragen, während der Boden zwischen 1 bis 2000 µm breit sein kann. Die gesamte Ausdehnung der Ausnehmung 52 (Kammerweite) kann zwischen 20 bis 5000 µm betragen.

Fig. 15 zeigt einen Probenträger 50 mit einem halbseitig perforierten Boden 54, der in seinem nicht perforierten Abschnitt 62 zur Lichteinkopplung (bei 63 angedeutet) transparent ist.

Fig. 16 zeigt eine Variante eines Probenträgers mit einem halbseitig semitransparenten Siebboden 54, der über eine Hälfte seiner Fläche mit einer aufgesputterten Filterschicht 64 für eine teilreflektierende Lichteinkopplung (bei 66 angedeutet) über den Boden ausgestattet ist. Die Filterschicht 64 weist vorzugsweise eine Dicke zwischen 20 bis 500 nm auf.

Fig. 17 zeigt einen Probenträger 50 mit geteilter transparenter Bodenhälfte für ungedämpfte und abgeschwächte bzw. teilreflektierte Lichteinkopplung und gleichzeitige volle Lichteinkopplung über zwei Teilstrahlen (Breite ca. 2 bis 2000 µm). Die geschlossene Bodenhälfte ist bei 68 dargestellt und weist einen bei 70 angedeuteten transparenten Teil und einen bei 72 angedeuteten semitransparenten teilreflektierenden Teil auf. Die Lichtstrahlen des Einkopplungslichtes sind bei 74,76 angedeutet.

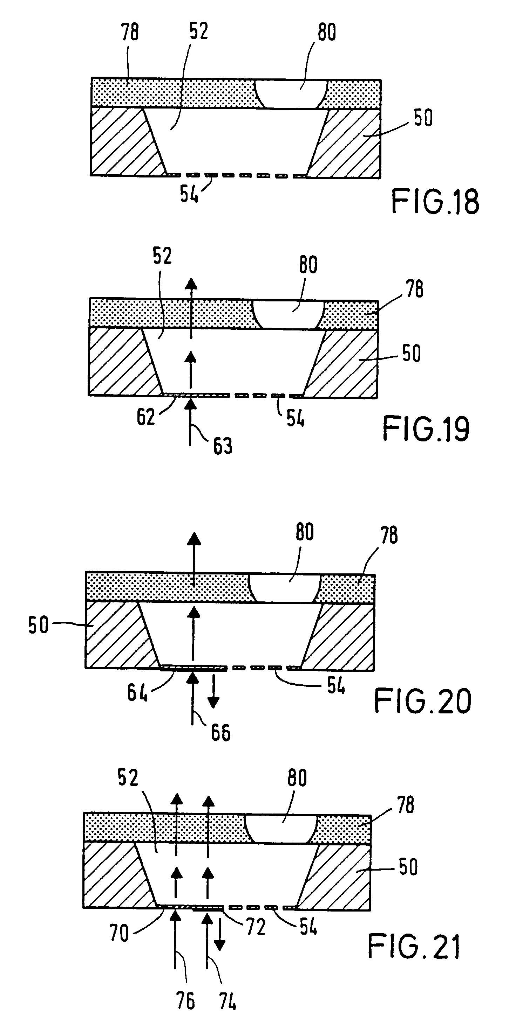

In Fig. 18 ist ein weiteres Ausführungsbeispiel eines Probenträgers 50 dargestellt. Dieser Probenträger 50 ist auf seiner Oberseite mit einer Abdeckung 78 versehen, die eine mit der Ausnehmung 52 fluchtende Durchlaßöffnung 80 aufweist, über die eine Probe in die Ausnehmung 52 appliziert wird. Die Abdeckung besteht beispielsweise aus Silizium, Quarz, Polymer wie beispielsweise PMMA oder Glas und kann eine Dicke im Bereich zwischen 50 bis 5000 µm aufweisen. Die Weite der Durchlaßöffnung 80 kann zwischen 20 bis 2000 µm liegen. Die Halterung der Abdeckung 78 an dem Probenträger 50 erfolgt beispielsweise durch mechanische Klemmung, die wieder lösbar ist, oder durch Kleben (Klebespalt) oder durch anodisches Bonden oder Wafer-Wafer-Bonden.

Fig. 19 zeigt den Fall eines Probenträgers 50 mit Abdeckung 78 und halbseitig perforiertem Siebboden, der halbseitig transparent für die Lichteinkopplung ist. Der geschlossene und für die Lichteinkopplung transparente Teil des Bodens ist bei 62 dargestellt.

Eine Variante zur Ausführungsform gemäß Fig. 18 ist in Fig. 20 dargestellt. Dort ist der Boden einer Ausnehmung 52 des Probenträgers 50 halbseitig semitransparent für eine teilreflektierende Lichteinkopplung (bei 66 angedeutet) ausgebildet. Der halbseitige semitransparente Teil des Siebbodens ist bei 64 zu erkennen.

Fig. 21 schließlich zeigt die Kombination der Ausführungsform gemäß Fign. 17 und 18.

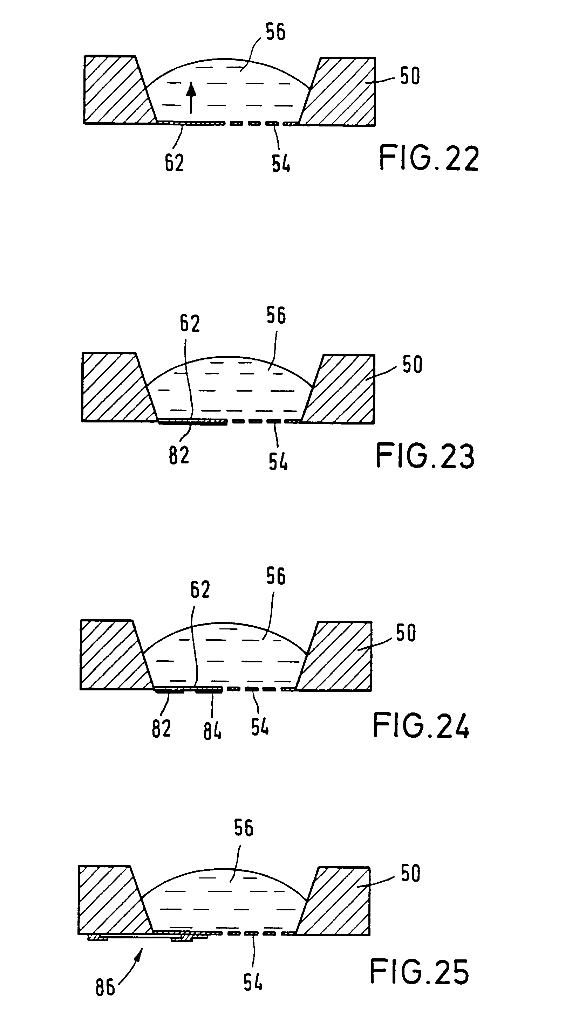

Fig. 22 zeigt einen Probenträger 50 mit halbseitig geschlossenem Siebboden (geschlossener Teil bei 62 dargestellt), der der Aufnahme von integrierten Mikrosensoren oder Mikroaktoren dient. Diese Mikrosensoren sind zweckmäßigerweise im geschlossenen Teil 62 des Bodens integriert.

Ein Beispiel für einen Probenträger 50 mit halbseitig geschlossenem Siebboden 54 (geschlossener Teil ist bei 62 angedeutet) und in diesem bzw. an diesem angeordneten integrierten Dünnschichtheizer 82 ist in Fig. 23 dargestellt. Der Dünnschichtheizer 82 besteht aus Metall, einer Metallegierung oder einem Metalloxid und kann Schichtdicken zwischen 40 nm bis 4 µm aufweisen. Er kann in Form eines Streifenelementes oder mäanderförmig mit Leiterbahnbreiten von ca. 1 bis 2000 µm ausgebildet sein. Der integrierte Dünnschichtheizer 82 kann funktionsmäßig kombiniert sein mit der halbdurchlässigen Reflektionsschicht (s. Filterschicht 64 in Fig. 16) und kann gleichzeitig als Meß- oder als Heizelement in einer Dicke zwischen 30 bis 300 µm ausgeführt sein.

In Fig. 24 ist ein Probenträger 50 dargestellt, dessen geschlossener Teil 62 seines Siebbodens 54 mit einem integrierten Dünnschichtheizer 82 als Heizelement und einem integrierten Dünnschicht-Meßwiderstand 84 (Thermistor) für die simultane Temperatursteuerung und Kontrolle, gegebenenfalls als Regelkreis ausgelegt, versehen ist.

Gemäß dem Ausführungsbeispiel nach Fig. 25 wird das Meßelement als Mikro-Thermopile 86 zur genauen Messung lokaler Temperaturgradienten ausgeführt. Derartige Meßelemente sind an sich bekannt.

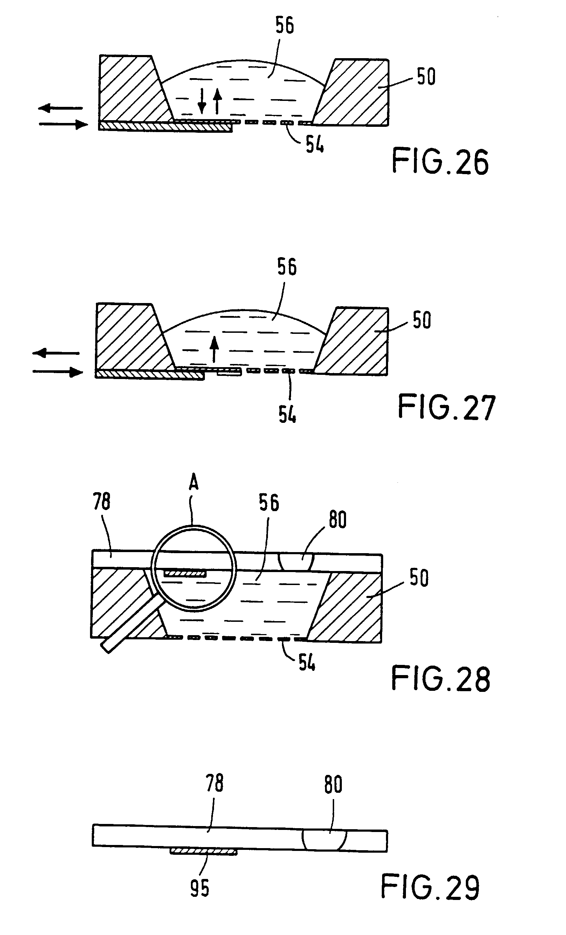

Fig. 26 schließlich zeigt den Fall eines Probenträgers 50 mit einem an der Unterseite angeordneten Dünnschicht-Wellenleiter 88, der über ein Einkopplungsglied (optisches Element) 90 durch einen transparenten und ansonsten geschlossenen Bereich 92 des Siebbodens 54 Licht in die Ausnehmung 52 einkoppelt. Selbstverständlich kann die in Fig. 26 dargestellte Ausführungsform auch Licht aus der Ausnehmung 52 auskoppeln.

Schließlich ist in Fig. 27 eine Kombination der Ausführungsformen nach den Fign. 24 und 26 dargestellt. Der Probenträger 50 der Fig. 27 weist also einen Dünnschicht-Wellenleiter 88 zum Ein- und Auskoppeln von Licht in die Ausnehmung 52 hinein und aus der Ausnehmung 52 heraus auf. Zusätzlich ist im Bereich des transparenten geschlossenen Bodenbereichs 92 ein thermischer Sensor und Mikroheizer (bei 94 angedeutet) integriert.

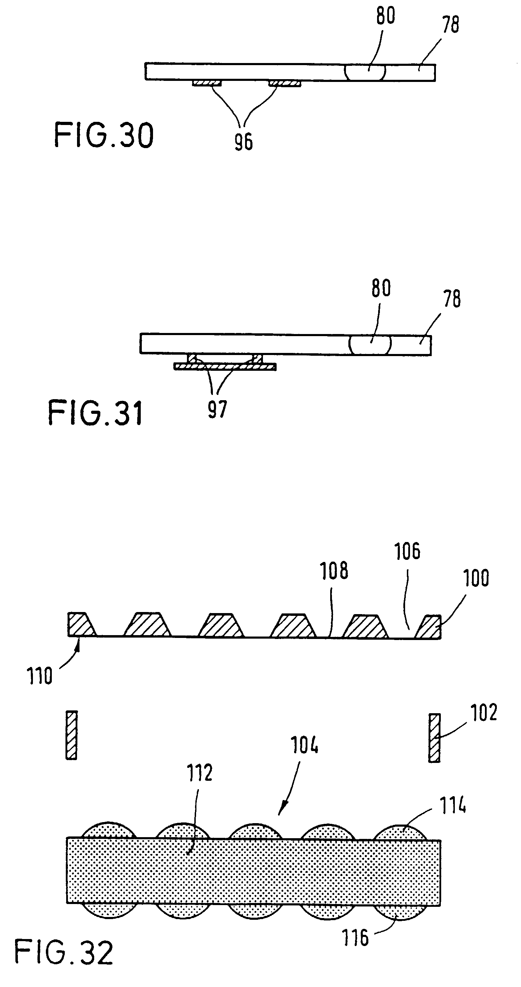

Fig. 28 zeigt ein Ausführungsbeispiel eines Probenträgers 50 mit einer Abdeckung 78 (wie in Fig. 18), wobei unterhalb der Abdeckung 78 (im bei A angedeuteten Bereich) ein der betreffenden Ausnehmung 52 zugeordnetes Sensor- oder Aktuatorelement angeordnet ist. Dieses Sensor- und/oder Aktuatorelement kann gemäß Fig. 29 ein Dünnschichtwiderstand 95 mit einer Schichtdicke von 40 bis 4000 µm als Mikroheizer oder Thermistor mit einer Breite von ca. 1 bis 2000 µm sein. Gemäß Fig. 30 kann es sich bei dem innen an der Abdeckung 78 befindlichen Element um Mikroelektroden 96, beispielsweise aus Pt, Pd, Ao, Al, Cr oder Ti mit Breiten zwischen 0,3 und 2000 µm für lokale elektrochemische Umwandlung und/oder lokale Elektromigration, elektroforetische Trennung oder Molekülsorting handeln. Der Elektrodenabstand beträgt vorzugsweise 0,6 bis 2000 µm, während die Elektrodenstärke (Dicke) im Bereich zwischen 40 bis 4000 nm liegen kann. Bei dem unterhalb der Abdeckung 78 angeordneten Element kann es sich auch um freitragende Mikroelektroden 97 handeln (s. Fig. 31), die der mikrokapazitiven Messung und/oder einer moleküldynamischen Relaktationsmessung bei hohen lokalen Feldstärken dienen. Die Spannweite der Luftbrücke zwischen den Mikroelektroden 97 beträgt etwa 0,5 und kann bis 2000 µm betragen. Die Elektrodendicke liegt bei 40 nm bis 2000 µm, die Spannweite zwischen 0,1 und 200 µm, vorzugsweise zwischen 1 bis 4 µm.

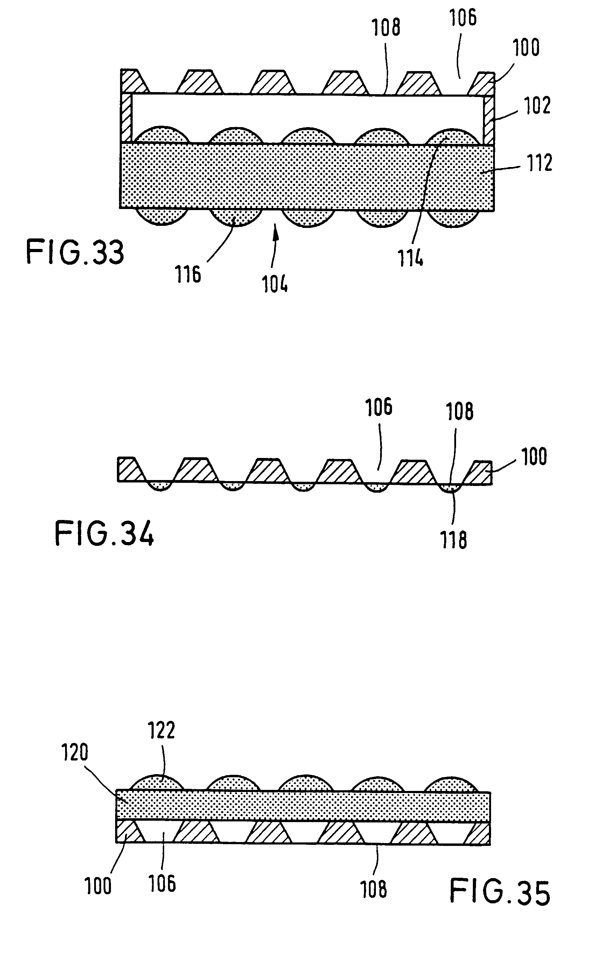

In Fig. 32 ist in Explosionsdarstellung ein Probenträger 100 mit mit diesem über einen Abstandsring 102 verbundenem Doppel-Linsenarray 104 dargestellt. Die Darstellung im zusammengebauten Zustand zeigt Fig. 33. Der Probenträger 100 ist mit einer Vielzahl von Ausnehmungen 106 versehen, die geschlossene oder poröse Böden 108 aufweisen. Der Abstandsring bzw. Abstandskörper 102 ist an der Unterseite 110 des Probenträgers 100 befestigt und hält das an ihm anliegende Doppel-Linsenarray 104 auf Abstand zu den Böden 108. Das Doppel-Linsenarray 104 besteht aus einer transparenten Platte 112, die an ihren großflächigen Seiten mit Linsen 114 (auf der Oberseite) und 116 (auf der Unterseite) versehen ist. Dabei fallen die optischen Achsen zweier einander gegenüberliegender Linsen 114,116 zusammen, wobei diese optischen Achsen mit der Mittelachse einer Ausnehmung 106 zusammenfallen. Jeder Ausnehmung 106 sind also zwei Linsen 114,116 zugeordnet. Mit dem Doppel-Linsenarray 104 ist es möglich, aus den Bodenbereichen 108 der Ausnehmungen 106 austretendes Licht auf einen Empfänger, beispielsweise eine CCD-Kamera zu projizieren. Probenträger 100, Abstandshalter 102 und Doppel-Linsenarray 104 sind durch Kleben oder anodisches Bonden miteinander verbunden. Die Mikrolinsen 114,116 können je nach erforderlicher Brennweite und optischer Qualität als sphärische oder Fresnel-Linsen ausgeführt sein. Die Ausführungsform gemäß den Fign. 32 und 33 sowie die nachfolgend noch zu beschreibenden Ausführungsbeispiele gemäß den Fign. 34 bis 38 sind als faseroptische Platte bei den Ausführungsformen den Fign. 1 und 2 einsetzbar.

Eine andere Ausgestaltung einer Kombination von Mikrolinsen mit dem Probenträger ist in Fig. 34 dargestellt. Dort befinden sich die Mikrolinsen 118 direkt an der Unterseite der Böden 108 des Probenträgers 100.

Zur Projektion von nach oben aus den Ausnehmungen 106 austretendem Licht wird ein Aufbau wie in Fig. 35 gezeigt vorgeschlagen. Der Probenträger 100 weist an seiner Oberseite eine transparente Platte 120 auf, auf deren dem Probenträger 100 abgewandten Oberseite Mikrolinsen 122 angeordnet sind, wobei jede Mikrolinse 122 einer Ausnehmung 106, nämlich der unter ihr angeordneten, zugeordnet ist. Die planparallele Platte aus optisch transparentem Material besteht beispielsweise aus Glas oder Polymer und weist eine Dicke im Bereich zwischen 0,1 und 30 mm auf. Die Verbindung dieser Platte 120 mit dem Probenträger 100 ist dergestalt, daß die optischen Achsen der Mikrolinsen 122 sich in den Mittelachsen der Ausnehmungen 106 fortsetzen.

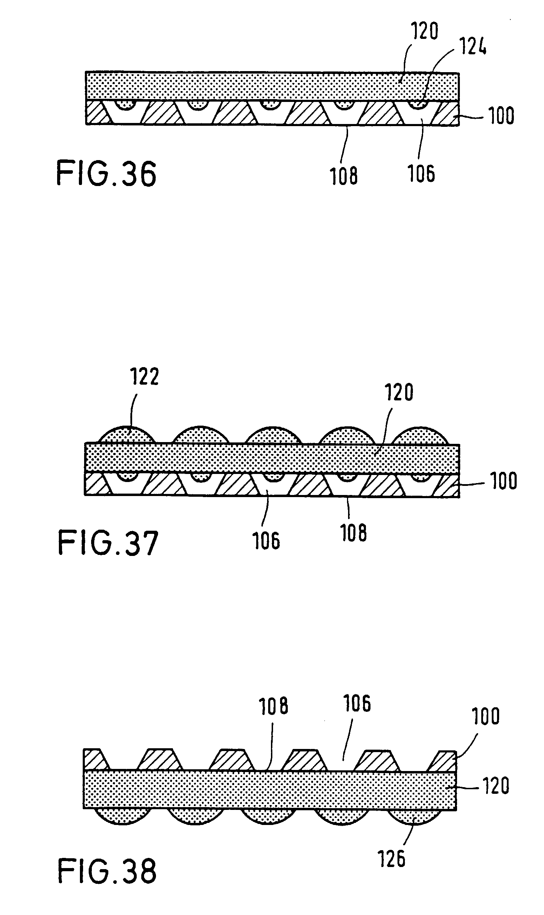

Fig. 36 zeigt eine Alternative zu Fig. 35, wobei die Mikrolinsen 124 auf der dem Probenträger 100 zugewandten Unterseite der planparallelen Platte 120 aus optisch transparentem Material angeordnet sind. Auch für das Ausführungsbeispiel gemäß Fig. 36 gilt, daß die Mikrolinsen 124 achsenzentriert zu den Ausnehmungen 106 angeordnet sind. Die Mikrolinsen 124 weisen vorzugsweise Brennweiten von ca. 0,1 bis 5 mm auf.

Fig. 37 zeigt die Kombination aus den Fign. 35 und 36. Auf der Oberseite des Probenträgers 100 ist die planparallele Platte 120 aus optisch transparentem Material angebracht, die, einander gegenüberliegenden, auf ihrer Oberseite und ihrer Unterseite Mikrolinsen 122,124 aufweist. Ein Paar von Mikrolinsen 122,124 ist jeweils einander gegenüberliegend angeordnet, so daß die optischen Achsen beider Linsen zusammenfallen. Es handelt sich bei dem Ausführungsbeispiel gemäß Fig. 37, wie bei demjenigen gemäß den Fign. 32 und 33, um die Kombination eines Probenträgers mit einem Doppel-Linsenarray. Das Doppel-Linsenarray gemäß Fig. 37 ist achsenzentriert zu den Ausnehmungen 106 angeordnet. Die Wahl der Plattendicke und Brennweiten der Linsen ist vorzugsweise dergestalt, daß in den Ausnehmungen 106 entstehendes Licht in parallele oder leicht konvergierende Strahlenbündel gebracht wird.

Fig. 38 zeigt ein weiteres Ausführungsbeispiel einer Kombination aus Probenträger 100 und Linsenarray, wobei die planparallele Platte 120 dieses Linsenarrays direkt an der Unterseite des Probenträgers 100 anliegt. Achsenzentriert zu den Ausnehmungen 106 sind an der Unterseite der planparallelen Platte 120 die Mikrolinsen 126 angebracht. Über die Dicke der planparallelen Platte 120 kann der günstigste Abstand zwischen Linsenarray und Bodenbereich des Probenträgers 100 eingestellt werden. Der Dickenbereich der Platte liegt vorzugsweise im Bereich zwischen 0,1 und 30 mm.

Für die in den Fign. 32 bis 38 beschriebenen Ausführungsformen gilt, daß die Bodenbereiche der Ausnehmungen geschlossen oder porös ausgebildet sein können. In beiden Fällen läßt sich ein Einfach- oder Doppel-Linsenarray zur Lichtein- und zur Lichtauskopplung am Probenträger anbringen.

Nachfolgend soll noch auf die Verwendung eines Probenträgers einer der vorstehend beschriebenen Arten zur Synthese eingegangen werden. In einer Standardsynthese wird zunächst der übliche Schritt des Bindens eines Nukeotids durchgeführt. Dabei werden folgende tabellarisch aufgeführten Schritte durch Anfahren der jeweiligen Pipettierposition (Dosierkopf mit entsprechender Lösung wird zur Applikation in eine gewünschte Ausnehmung des Probenträgers bewegt) vollzogen:

| DNA-Synthese nach einem Standardprotokoll | | | | |
|---|---|---|---|---|
| 1. | Waschen des Supports mit Dichlorethan | DCA | 1.50 min | 15 s |
| 2. | Deprotection der 5'-OH-Gruppe der terminalen 2'-Deoxyribose, Entfernen der DMTr-Gruppe | Detrit. | 3.00 min | 30 s |
| 3. | Entfernen der DMTr-Gruppe | DCA | 2.00 min | 20 s |
| 4. | Waschen mit Acetonitril, um wasserfreie Bedingungen für Kupplung zu bekommen | Aceto. | 1.00 min | 10 s |
| 5. | Aktivierung der Phosphoamidite mit Tetrazol und Kupplung | Aceto. : Tetra. 1 : 4 | 2.00 min | 20 s |
| 6. | Waschen | Aceto. | 0.30 min | 3 s |
| 7. | Capping A | Cap. A | 0.10 min | 1 s |
| 8. | Capping B | Cap. B | 0.10 min | 1 s |
| 9. | Waschen | Aceto. | 0.30 min | 3 s |
| 10. | Oxidation | Ox. | 0.10 min | 5 s |
| 11. | Waschen | Aceto. | 0.50 min | 5 s |
| 12. | Für weitere Zyklen: Wiederholung von 1. bis 11. | | | |
| 13. | Nach letztem Zyklus: Wiederholung von 1. bis 4. | | | |

Die Rekationszeiten lassen sich bei Optimierung des Prozesses um einen Faktor 10 (letzte Spalte) reduzieren. Beim Waschen können und sollen große Mengen Material eingesetzt werden (relativ billig). Bei Schritt 5. dagegen muß mit möglichst geringen Mengen gearbeitet werden. Das Volumen pro Kammer beträgt 100 nl, das mit Support (z.B. Glasstaub, Harze) befüllt ist. Bei Schritt 5. muß für eine ausreichende Benetzung gesorgt werden.

Eine solche Standardoligo - oder (analog) Peptidsynthese wird für Sequenzen der Länge m n-mal wiederholt.

Bei Peptidsequenzen unbekannter Eigenschaft (und das wird meistens der Fall sein) wird mit einer Bindungsstudie z.B. Antigen etc. die Qualität des entstandenen Peptides getestet. Diese z.B. in Leuchtkraft gemessene Fitness mit der Sequenzzuordnung wird dem Rechner zur Feststellung der Fitnesslandschaft und anschließender Optimierung überlassen.

Ein solches Verfahren wird im folgenden beschrieben.

Man startet mit einer Zufallspopulation von Peptiden, die jedoch auch an einigen Regionen konstant sein dürfen (z.B. künstliche Immunglobuline). Diese werden synthetisiert und auf ihre Wirksamkeit hin untersucht, d.h. jeder Sequenz wird ein Fitnesswert zugeordnet. Ein neuronales Netz (NN) wird nun trainiert, indem man die Abhängigkeit von Sequenz und Fitnesswerten lernen läßt. Das NN hat lediglich die Aufgabe, die Fitnessfunktion zu lernen, die man bei vielen Aufgaben nicht kennt. Parallel dazu läßt man Algorithmen evolieren.
- Monomer [Position] = Monomer oder chemische Gruppe oder Zufallseinheit.
- Monomer [Position 1 - Position 2] = definierte Monomerfolge oder definierte chemische Gruppenfolge oder Zufallssequenz.
- if Monomer [Position] = Monomer oder chemische Gruppe then toto Zeilennummer.
- goto Zeilennummer.
- writeln (Monomer oder Monomer [Position]).
- Callprocᵢ (Monomer oder Monomerfolge).

Diese Programme sollen Peptide (oder andere Biopolymere oder für bestimmte innerhalb eines Bakteriums kodierende Gensequenzen) konstruieren. Diese Peptide (oder anderes biologisches Material) werden dem NN gegeben, welches dazugehörige Fitnesswerte abschätzt, die wiederum als Grundlage zur Algorithmusbewertung dienen. Hat man einen Algorithmus gewonnen, dessen Fitness einem Grenzkriterium genügt, werden entsprechend diesem Algorithmus Peptide synthetisiert und das gesamte Verfahren iteriert.

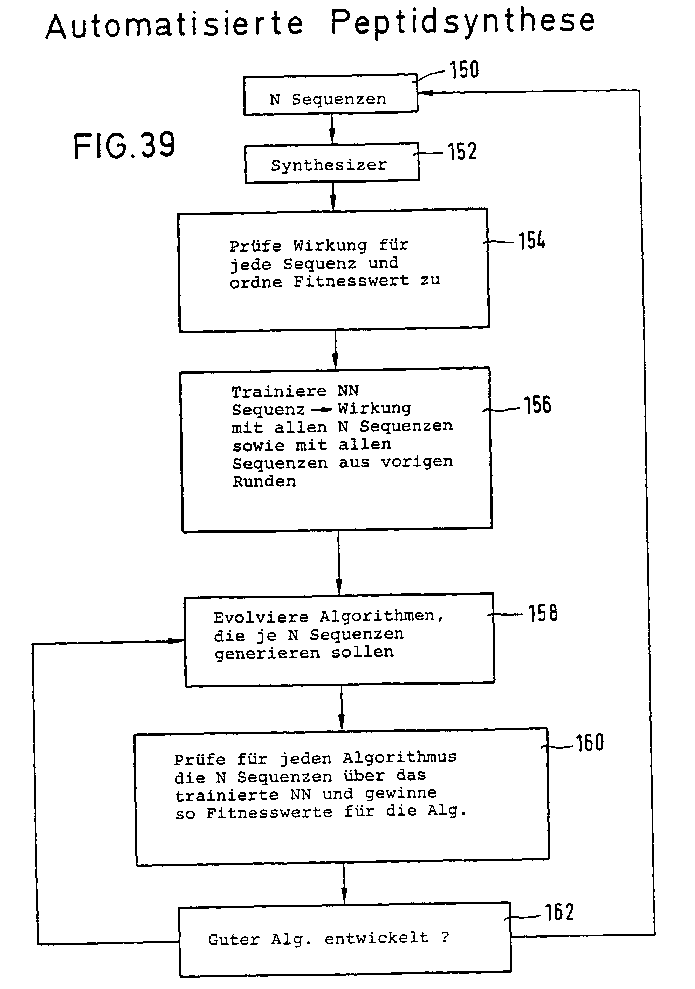

Eine graphische Darstellung einer automatisierten Peptidsynthese ist als Flußdiagramm in Fig. 39 gezeigt. Die Schritte 158 bis 162 lassen sich alternativ oder auch zusätzlich für die Sequenzen selbst durchführen. Bei Schritt 158 können also alternativ oder zusätzlich auch N Sequenzen über ein herkömmliches Optimierungsverfahren selbst gefunden werden. Entsprechend wird dann alternativ oder zusätzlich in Schritt 160 der Fitnesswert für jede der N Sequenzen mit Hilfe des trainierten NN ermittelt. Schließlich wird die Abfrage in Schritt 162 dahingehend geändert oder ergänzt, daß abgefragt wird, ob eine "gute" Sequenz ermittelt wurde.

Mit Hilfe dieses Verfahrens wäre es möglich Peptide zu gewinnen, die HIV neutralisieren. Die synthetisierten Peptide müssen lediglich auf ihre Wirksamkeit bezüglich HIV untersucht werden. Das NN lernt dann, Sequenzen bezüglich ihrer Wirksamkeit gegenüber HIV zu kategorisieren. Die Vorteile eines solchen Vorgehens sind die Erlangung
- einer Konstruktion eines NN, welches gelernt hat, gewisse Bewertungskriterien bezüglich der gewünschten Eigenschaften zu verallgemeinern,
- eines Algorithmus, von dem man lernen kann, welche strukturellen Eigenschaften ein Biopolymer haben muß, um eine gewünschte funktionale Eigenschaft zu erzielen,
- des Peptids als Molekül selbst und
- neuer Einsichten über antivirale Strategien, Bindedomänen etc.

Mit Hilfe der hier beschriebenen Einrichtungen kann eine Evolutionsmaschine mit folgendem Charakteristika aufgebaut werden: Einzelreaktoren des Volumens 1 nl bis zu 100 nl bilden ein zweidimensionales Feld (Array) von Kammern. Jede einzelne Kammer ist durch ihre Position in x- und in y-Richtung exakt definiert. X-y-Tische mit den erforderlichen Positioniergenauigkeiten sind kommerziell verfügbar. Der als Kammerträger fungierende Wafer ist mit dem xy-Tisch starr verbunden. Über den PC-gesteuerten Tisch läßt sich jede gewünschte Kammer in jede gewünschte Position bringen. Damit kann jede Kammer in beliebiger zeitlicher Reihenfolge unter jeder der Entnahmepositionen (Nadel) und des Mikrodosiersystems bzw. unter jedem Sensor plaziert werden. Über ein Tischsteuerprogramm kann die systematische Abfrage der einzelnen Kammern oder von Stichproben erfolgen. Die Transferoperationen und die Ergebnisse von Meßvorgängen können mit den dazugehörigen Zeit- und Ortsangaben auf einem digitalen Datenspeicher (z.B. Festplatte) abgelegt werden.

Durch die Festlegung im Bus-Steuerprogramm kann die automatische Abarbeitung von Parallelversuchen mit Transferoperationen und Meßvorgängen sehr rationell organisiert werden. Die Auswertung über den Steuerrechner erleichtert entscheidend die Datenzuordnung und garantiert auch bei großer Kammerzahl und damit großer Anzahl von Einzeloperationen ein geringes Fehlerrisiko. Mit Hilfe der Speicherung der Daten von allen Einzeloperationen lassen sich Prozeßabläufe leicht rekonstruieren.

Durch die Rechnerkontrolle kann auch ein verzweigtes Arbeitsprogramm aufgebaut werden, bei dem die Abhängigkeit von Meßergebnissen (z.B. als Maß für Stoffwechselaktivität oder Produktkonzentration) Entscheidungen über Transferoperationen vorgenommen werden. Die notwendigen Meßoperationen lassen sich ebenfalls nach dieser ergebnisorientierten Programmentscheidung automatisch festlegen. Damit wird ein selbstoptimierender Automat verwirklicht.

Durch die große Anzahl arbeitender Reaktionskammern kann einerseits die Wirkung vieler verschiedener Streßfaktoren auf ein Produkt in einem Durchlauf getestet werden. Andererseits können viele verschiedene Produkte unter Einwirkung eines Streßfaktors getestet werden. Sektorweise oder zeilenweise lassen sich Streßfaktoren paar- oder gruppenweise in feinen Konzentrationsabstufungen kombinieren. In Abhängigkeit vom Steuerprogramm können Wachstumsvorgänge auch in einer Sukzession des Einwirkens unterschiedlicher Streßkombinationen, d.h. Selektionsfaktoren ablaufen, wenn die entsprechenden Transferoperationen durchgeführt werden. Dadurch wird eine Wachstumslinie einer Abfolge unterschiedlicher Bewertungslandschaften unterworfen, wobei die Auswahlkriterien fest oder bedingt vorherbestimmt sein können. Auf diese Weise lassen sich in einer solchen Evolutionsmaschine geradezu komplexe Selektionspfade konstruieren oder untersuchen. Gegebenenfalls lassen sich auch Konkurrenzverhältnisse und Rekombinationsprozesse nach größeren evolutiven Schleifen experimentell erkunden.

Thermostatierung und Thermoisolation dienen dem Zweck, die gewünschten Wachstums- oder Reaktionstemperaturen einzustellen. Lokale Temperaturgradienten können über integrierte Mikroheizer eingestellt werden, die in Dünnschichttechnik auf dem Trägerwafer ausgeführt sind.

Während die Zuordnung des Mikrodosiersystems zu einer bestimmten Kammer über den xy-Tisch erfolgt, muß die Kapillarspitze bzw. die Impfnadel zum Zwecke der Probenentnahme oder Probenzuführung in eine Kammer in z-Richtung abgesenkt werden. Im abgesenkten Zustand ist kein xy-Transport möglich. Der Transport in z-Richtung muß über einen separaten Antrieb (Schrittmotor) erfolgen.

Als Sensoren zur Messung von Reaktionsverläufen bzw. mikrobiellem Wachstum bieten sich spektroskopische oder fluorimetrische Verfahren an, da bei diesen Verfahren kein direkter Kontakt zwischen Lösung und Sonde zu bestehen braucht. Über Absorptions- oder Fluoreszenzmessungen läßt sich eine mittlere bis hohe Selektivität der Meßverfahren erreichen.

Um die Messung bei hoher Meßrate genau zu gestalten, d.h. hohe Integrationszeiten zu ermöglichen, ist der Einsatz einer CCD-Kamera anstelle von Einzelsonden sinnvoll.

## Patentansprüche

1. Vorrichtung zur Aufnahme einer Vielzahl von chemischen und/oder biologischen Proben, mit
- mindestens einem mikromechanischen Probenträger (50;100) mit einer Unterseite (60;110) und einer dieser abgewandten Oberseite (58), in der auf nicht-spanende Weise, insbesondere durch Ätzen, eine Vielzahl von Ausnehmungen (52;106) mit Böden (54;108) ausgebildet sind,
**dadurch gekennzeichnet,**
- daß ein Linsenarray (104) vorgesehen ist, das für jede Ausnehmung (106) mindestens eine Linse (114,116;122,124) aufweist.

2. Vorrichtung nach Anspruch 1, dadurch gekennzeichnet, daß jeder Ausnehmung (106) eine Linse (114,116; 122,124) oder ein Linsenpaar (114,116;122,124) des Linsenarrays (104) zugeordnet ist.

3. Vorrichtung nach Anspruch 1 oder 2, dadurch gekennzeichnet, daß das Linsenarray (104) eine planparallele Platte (112;120) aus optisch transparentem Material mit einer Oberseite und einer dieser abgewandten Unterseite aufweist und daß die Linsen (114,116;122,124) auf der Oberseite und/oder der Unterseite der planparallelen Platte (112;120) angeordnet sind.

4. Vorrichtung nach einem der Ansprüche 1 bis 3, dadurch gekennzeichnet, daß das Linsenarray (104) von dem Probenträger (50;100) beabstandet ist.

5. Vorrichtung nach einem der Ansprüche 1 bis 3, dadurch gekennzeichnet, daß das Linsenarray (104) auf der Oberseite (58) des Probenträgers (50;100) angeordnet ist.

6. Vorrichtung nach Anspruch 5, dadurch gekennzeichnet, daß das Linsenarray (104) eine planparallele Platte (120) aus optisch transparentem Material aufweist, die auf ihrer dem Probenträger (50;100) abgewandten Oberseite mit Linsen (122) versehen ist.

7. Vorrichtung nach Anspruch 5, dadurch gekennzeichnet, daß das Linsenarray (104) eine planparallele Platte (120) aus optisch transparentem Material aufweist, die auf ihrer dem Probenträger (50;100) zugewandten Unterseite mit Linsen (124) versehen ist.

8. Vorrichtung nach Anspruch 5, dadurch gekennzeichnet, daß das Linsenarray (104) eine planparallele Platte (120) aus optisch transparentem Material aufweist, die auf ihrer dem Probenträger (50;100) abgewandten Oberseite und auf ihrer dem Probenträger (50;100) zugewandten Unterseite jeweils mit Linsen (122,124) versehen ist.

9. Vorrichtung nach einem der Ansprüche 1 bis 8, dadurch gekennzeichnet, daß die optische Achse der einer Ausnehmung (106) zugeordneten Linse (114,116;122,124) oder die optischen Achsen der einer Ausnehmung (106) zugeordneten Linsen oder ihre Verlängerung bzw. Verlängerungen durch die Ausnehmung oder Ausnehmungen (106) hindurch verläuft bzw. verlaufen.

10. Vorrichtung nach Anspruch 1 oder 2, dadurch gekennzeichnet, daß die Linsen (114,116) des Linsenarrays (104) in den Böden (108) der Ausnehmungen (106) integriert sind.

11. Vorrichtung nach einem der Ansprüche 1 bis 10, dadurch gekennzeichnet, daß der Abstand benachbarter Ausnehmungen (52;106) kleiner als oder gleich 5 mm ist.

12. Vorrichtung nach einem der Ansprüche 1 bis 11, dadurch gekennzeichnet, daß der Probenträger (50;100) aus einem Halbleiter-Material der Gruppe III bis VIII der Elemente des Periodensystems, insbesondere Silizium, besteht oder dieses Halbleiter-Material insbesondere Silizium aufweist und daß zur Herstellung der Ausnehmungen (52;106) ein Lithographie-Prozeß verwendet wird.

13. Vorrichtung nach einem der Ansprüche 1 bis 11, dadurch gekennzeichnet, daß der Probenträger (50;100) aus einem Kunststoffmaterial besteht oder dieses aufweist und daß die Ausnehmungen mittels LIGA-Technik hergestellt sind.

14. Vorrichtung nach einem der Ansprüche 1 bis 13, dadurch gekennzeichnet, daß der Probenträger (50;100) scheiben- oder plattenförmig, insbesondere nach Art eines Wafer, ausgebildet ist.

15. Vorrichtung nach einem der Ansprüche 1 bis 14, dadurch gekennzeichnet, daß mehrere Probenträger (50;100) übereinander angeordnet sind, wobei die Böden (54;108) der Ausnehmungen (52;106) eines Probenträgers (50;100) mit den Ausnehmungen (52;106) und Böden (54;108) eines benachbarten Probenträgers (50;100) fluchtend ausgerichtet sind.

16. Vorrichtung nach einem der Ansprüche 1 bis 15, dadurch gekennzeichnet, daß die Ausnehmungen (52;106) diese begrenzenden Flächen aufweisen, die mit für die jeweilige chemische und/oder biologische Reaktion inertem Material versehen sind.

17. Vorrichtung nach einem der Ansprüche 1 bis 16, dadurch gekennzeichnet, daß die Ausnehmungen (52;106) mindestens ein chromatographisches Trennmaterial beinhalten.

18. Vorrichtung nach einem der Ansprüche 1 bis 17, dadurch gekennzeichnet, daß die Böden (54;108) jeweils teilweise mit einer Filterschicht (64) aus einem semitransparenten Material zur teilreflektierenden Einkopplung elektromagnetischer Strahlung, insbesondere Licht, versehen sind.

19. Vorrichtung nach Anspruch 18, dadurch gekennzeichnet, daß die Filterschicht (64) gesputtert ist.

20. Vorrichtung nach einem der Ansprüche 1 bis 19, dadurch gekennzeichnet, daß die Böden (54;108) jeweils mit einer Filterschicht (64) aus einem für elektromagnetische Wellen, insbesondere Licht, transparenten Material versehen ist.

21. Vorrichtung nach einem der Ansprüche 1 bis 20, dadurch gekennzeichnet, daß die Böden (54;108) jeweils mit Schichten zur ungedämpften und abgeschwächten bzw. teilreflektierenden Einkopplung und gleichzeitig vollen Einkopplung von elektromagnetischer Strahlung, insbesondere Licht, durch getrennte Teilstrahlen versehen sind.

22. Vorrichtung nach einem der Ansprüche 1 bis 21, dadurch gekennzeichnet, daß auf der Oberseite (58) des Probenträgers (50;100) oder, im Falle mehrere übereinander angeordneter Probenträger (50;100), auf der Oberseite (58) des obersten Probenträgers (50;100) eine Abdeckung (78) mit einzelnen mit den Ausnehmungen (52;106) fluchtenden Durchlaßöffnungen (80) angeordnet ist, die jeweils kleiner als der Öffnungsquerschnitt der Ausnehmungen (52;106) in der Oberseite (58) des Probenträgers (50;100) sind.

23. Vorrichtung nach Anspruch 22, dadurch gekennzeichnet, daß die Abdeckung (78) mit dem Probenträger (50;100) durch mechanische Klemmung, insbesondere lösbare, durch Kleben, durch anodisches Bonden oder durch Wafer-Wafer-Bonden verbunden ist.

24. Vorrichtung nach Anspruch 22 oder 23, dadurch gekennzeichnet, daß die Abdeckung (78) aus einem ätzbaren Material besteht und die Durchlaßöffnungen (80) durch Ätzen lithographisch hergestellt sind.

25. Vorrichtung nach Anspruch 22 oder 23, dadurch gekennzeichnet, daß die Abdeckung (78) aus einem Kunststoffmaterial besteht oder dieses aufweist und daß die Durchlaßöffnungen (80) mittels LIGA-Technik hergestellt sind.

26. Vorrichtung nach einem der Ansprüche 1 bis 21 oder 22 bis 25, dadurch gekennzeichnet, daß insbesondere jede Ausnehmung (52;106) oder die den Ausnehmungen (52;106) des Probenträgers (50;100) zugewandte Unterseite der Abdeckung (78) für insbesondere jede Ausnehmung (52;106) mit einem Widerstandselement (82;95), insbesondere einem Dünnschichtwiderstand, als Mikroheizer oder Thermistor versehen ist.

27. Vorrichtung nach einem der Ansprüche 1 bis 21 oder 22 bis 26, dadurch gekennzeichnet, daß insbesondere jede Ausnehmung (52;106) oder die den Ausnehmungen (52;106) des Probenträgers (50;100) zugewandte Unterseite der Abdeckung (78) für insbesondere jede Ausnehmung (52;106) mit Elektroden (96,97) für lokale elektrochemische Umwandlung und/oder Molekülsortierung versehen ist.

28. Vorrichtung nach einem der Ansprüche 1 bis 21 oder 22 bis 27, dadurch gekennzeichnet, daß insbesondere jede Ausnehmung (52;106) oder die den Ausnehmungen (52;106) des Probenträgers (50;100) zugewandte Unterseite der Abdeckung (78) für insbesondere jede Ausnehmung (52;106) mit Elektroden (96,97) für mikrokapazitive Messungen und/oder die Applikation moleküldynamischer Feldstärken versehen ist.

29. Vorrichtung nach einem der Ansprüche 1 bis 28, dadurch gekennzeichnet, daß jede Ausnehmung (52;106) und insbesondere jeder Boden (54;108) mit einem elektrischen Widerstandselement (82), insbesondere Dünnschichtwiderstand als Heizelement versehen ist, das bzw. der in den Boden (54;108) integriert ist.

30. Vorrichtung nach Anspruch 21, dadurch gekennzeichnet, daß das Material des Widerstandselements (82) eine halbdurchlässige Reflexionsschicht bildet.

31. Vorrichtung nach einem der Ansprüche 1 bis 30, dadurch gekennzeichnet, daß jede Ausnehmung (52;106) und insbesondere jeder Boden (54;108) mit einem insbesondere integrierten elektrischen Widerstandselement (82), insbesondere Dünnschichtwiderstand als Heizelement und mit einem weiteren insbesondere integrierten elektrischen Widerstandselement (84), insbesondere Meßwiderstand versehen ist.

32. Vorrichtung nach einem der Ansprüche 1 bis 31, dadurch gekennzeichnet, daß jede Ausnehmung (52;106) und insbesondere jeder Boden (54;108) mit einem optischen Lichtwellenleiter (88) gekoppelt, insbesondere verbunden ist, dessen eines Ende über ein Koppelglied (90) mit einem für die über den Lichtwellenleiter zu übertragende elektromagnetische Strahlung transparenten Bodenbereich verbunden ist.

33. Vorrichtung nach einem der Ansprüche 1 bis 32, dadurch gekennzeichnet, daß jede Ausnehmung (52;106) mit mindestens einem Sensor (94) zur Messung eines Reaktionsparameters, insbesondere zur pH-Messung und/oder CO₂-Messung versehen ist oder jeder Ausnehmung (52;106) mindestens ein solcher Sensor (94) zugeordnet ist.

34. Vorrichtung nach einem der Ansprüche 1 bis 33, dadurch gekennzeichnet, daß zur Bildung von sich zwischen der Oberseite und der Unterseite des Probenträgers (50;100) erstreckenden Durchlässen die Böden (54;108) der Ausnehmungen (52;106) zumindest teilweise porös sind.

35. Vorrichtung nach Anspruch 34, dadurch gekennzeichnet, daß jeder Boden (54;108) einen geschlossenen (92) Bodenbereich und einen porösen Bodenbereich aufweist, die nebeneinander angeordnet sind.

## Claims

1. A device for receiving a plurality of chemical, and/or biological samples comprising
- at least one micro-mechanic sample holder (50; 100) including a side (60; 110) and a top-side (58) remote from said bottom side, said top-side being provided with a plurality of recesses (52; 106) having bases (54; 108), said recesses being produced by a non-cutting operation, in particular by etching,
characterised in that
- a lens array (104) is provided having at least one lens (114,116; 122, 124) for each recess (106).

2. A device as claimed in claim 1, wherein each recess (104) is correlated to a lens (114, 116; 122, 124) or to a couple of lenses (114, 116; 122, 124) of the lens array (104).

3. A device as claimed in claim 1 or 2, wherein said lens array (104) is provided with a plane parallel plate (112; 120) made of optically transmissive material, having a bottom side and a top-side remote from said bottom side, and wherein said lenses (114, 116; 122, 124) are arranged on the top-side and/or on the bottom side of said plane parallel plate (112; 120).

4. A device as claimed in any of the claims 1 to 3, wherein said lens array (104) is in spaced relation to said sample holder (50; 100).

5. A device as claimed in any of the claims 1 to 3, wherein said lens array (104) is arranged on the top-side (58) of the sample holder (50; 100).

6. A device as claimed in claim 5, wherein said lens array (104) is provided with a plane parallel plate (120) made of optically transmissive material, said plane parallel plate (120) being provided with lenses (122) on the top-side being remote from said sample holder (50; 100).

7. A device as claimed in claim 5, wherein said lens array (104) is provided with a plane parallel plate (120) made of optically transmissive material, and being provided with lenses (124) on the bottom side being adjacent to said sample holder (50; 100).

8. A device as claimed in claim 5, wherein said lens array (104) is provided with a plane parallel plate (120) made of optically transmissive material, and being provided with lenses (122 and 124, respectively), on the top-side being remote from said sample holder (50; 100) and on the bottom side being adjacent to said sample holder (50; 100), respectively.

9. A device as claimed in any of the claims 1 to 8, wherein the optical axis of the lens (114, 116; 122, 124) correlated to a recess (106) or the optical axes of the lenses correlated to a recess (106) or the extension/s therof, respectively, pass/es through the recess/es.

10. A device as claimed in claim 1 or 2, wherein the lenses (114, 116) of the lens array (104) are integrated in the bases (108) of the recesses (106).

11. A device as claimed in any of the preceding claims 1 to 10, wherein the space between adjacent recesses (52; 106) is smaller than or equal to 5mm.

12. A device as claimed in any of the preceding claims 1 to 11, wherein the material of the sample holder (50; 100) is selected from a semiconductor material of the groups III to VIII of the system of chemical elements, in particular silicon, or said semiconductor material particularly includes silicon, and wherein a lithographic process is employed for producing said recesses (52; 106).

13. A device as claimed in any of the preceding claims 1 to 11, wherein the sample holder (50; 100) is of plastic material or includes the same, and wherein the recesses are manufactured by LIGA-technics (a lithographic process of ionising radiation and galvanic formation).

14. A device as claimed in any of the preceding claims 1 to 13, wherein the sample holder (50; 100) is of disk-shape or plate-shape, in particular of the wafer kind.

15. A device as claimed in any of the preceding claims 1 to 14, wherein a plurality of the sample holders (50; 100) is arranged superjacently, the bases (54; 108) of the recesses (52; 106) of one sample holder /50; 100) being aligned to the recesses (52; 106) and bases (54; 108) of an adjacent sample holder (50; 100).

16. A device as claimed in any of the preceding claims 1 to 15, wherein the recesses (52; 106) have limiting areas which are provided with materials being inert to the respective chemical and/or biologic reaction.

17. A device as claimed in any of the preceding claims 1 to 16, wherein the recesses (52; 106) include at least one chromatographic separating material.

18. A device as claimed in any of the preceding claims 1 to 17, wherein the respective bases (54; 108) are partially provided with a filter layer (64) made of a semitransparent material for a partially reflecting coupling of electromagnetic radiation, in particular light.

19. A device as claimed in claim 18, wherein the filter layer (64) is sputtered.

20. A device as claimed in any of the preceding claims 1 to 19, wherein the respective bases (54; 108) are provided with a filter layer (64) made of a material which is transparent to electromagnetic waves, in particular light.

21. A device as claimed in any of the preceding claims 1 to 20, wherein the bases (54; 108) are provided with respective layers for non-attenuated and reduced, respectively, partially reflecting coupling and simultaneous complete coupling of electromagnetic radiation, in particular light, by virtue of separate split radiation.

22. A device as claimed in any of the preceding claims 1 to 21, wherein the top-side (58) of the sample holder (50; 100) or, when a plurality of superjacently arranged sample holders (50; 100) are concerned, the top-side (58) of the uppermost sample holder (50; 100) is provided with a cover (78) having individual passages (80) in alignment with the recesses (52; 106), said passages are smaller than the respective cross-section of the openings of the recesses (52; 106) in the top-side (58) of the sample holder (50; 100).

23. A device as claimed in claim 22, wherein said cover (78) is connected to the sample holder (50; 100) by mechanical clamping, in particular detachable clamping, by adhesives, by anodic bonding, or by wafer-to-wafer-bonding.

24. A device as claimed in claim 22 or 23, wherein said cover (78) is made of an etchable material and the passage (80) is lithographically produced by etching.

25. A device as claimed in claim 22 or 23, wherein said cover (78) is made of or includes a plastic material, and wherein the passages (80) are produced by LIGA-technics.

26. A device as claimed in any of the preceding claims 1 to 21 or 22 to 25, wherein particularly each of the recesses (52; 106) or the bottom side of the cover (78) in opposition to the recesses (52; 106) of the sample holder (50; 100) are provided with a resistance element (82; 95), in particular a thin layer resistor operating as micro-heater or thermistor, in particular, for each of the recesses (52; 106).

27. A device as claimed in any of the preceding claims 1 to 21 or 22 to 26, wherein particularly each of the recesses (52; 106) or the bottom side of the cover (78) in opposition to the recesses (52; 106) of the sample holder (50; 100) is provided with electrodes (96, 97) for, in particular, each of the recesses (52; 106) in order to perform local electrochemical conversion and/or molecular separation.

28. A device as claimed in any of the preceding claims 1 to 21 or 22 to 27, wherein particularly each of the recesses (52; 106) or the bottom side of the cover (78) in opposition to the recesses (52; 106) of the sample holder (50; 100) is provided with electrodes (96, 97) for, in particular, each of the recesses (52; 106) in order to perform micro-capacity measurements and/or to apply dynamic molecular field-intensities.

29. A device as claimed in any of the preceding claims 1 to 28, wherein each of the recesses (52; 106) and, in particular, each base (54; 108) is provided with an electric resistance element (82), in particular a thin-layer resistor operating as heating element being integrated in the base (54; 108).

30. A device as claimed in claim 21, wherein the material of the resistance element (82) forms a semi-transmissive reflecting layer.

31. A device as claimed in any of the preceding claims 1 to 30, wherein each of the recesses (52; 106) and, in particular, each base (54; 108) is provided with an, in particular, integrated electric resistance element (82), in particular a thin-layer resistor operating as heating element and with a further integrated electric resistance element (84), operating, in particular, as a measuring resistance.

32. A device as claimed in any of the preceding claims 1 to 31, wherein each of the recesses (52; 106) and, in particular, each base (54; 108) is coupled, in particular, connected to an optical light guide (88), one end portion of which is connected via a coupling member (90) to a range of the base being transparent to the electromagnetic radiation to be transmitted by the light guide.

33. A device as claimed in any of the preceding claims 1 to 32, wherein each of the recesses (52; 106) is provided with at least one sensor (94) for measuring one reaction parameter, in particular, for pH-measurement and /or a CO₂- measurement, or wherein at least one of said sensors (94) is associated to each of the recesses (52; 106).

34. A device as claimed in any of the preceding claims 1 to 33, wherein the bases (54; 108) of the recesses (52; 106) are at least partially porous, in order to provide for passages extending between the top-side and the bottom side of the sample holder (50; 100).

35. A device as claimed in claim 34, wherein each base (54; 108) comprises a non-porous range (92) and a porous range adjacently arranged.

## Revendications

1. Dispositif destiné à servir de support à un grand nombre d'échantillons chimiques et/ou biologiques comprenant
- au moins un porte-échantillons micromécanique (50; 100) présentant une surface de dessous (60; 110) et opposée à celle-ci, une surface de dessus (58) pourvue d'une multitude de creux (52; 106) avec fonds (54; 108) obtenus par un de traitement sans enlèvement de copeaux, de préférence par gravure,
**est caractérisé en ce que**
- le dispositif constitue un système composé (104) de nombreuses lentilles (114, 116; 122, 124), au moins une par creux (106).

2. Dispositif selon la revendication 1 est caractérisé en ce qu'à chaque creux (106) une lentille, une paire de lentilles (114, 116; 122, 124) ou un système de lentilles (114, 116; 122, 124) sont attribuées.

3. Dispositif selon la revendication 1 ou 2 est caractérisé en ce que le système de lentilles (104) est composé d'un plateau (112; 120) à faces planes et parallèles, en matière transparente à la lumière, présentant une surface de dessus et une surface de dessous opposée, et que les lentilles (114, 116; 122, 124) sont disposées sur la surface de dessus et /ou sur la surface de dessous du plateau à faces planes et parallèles (112; 120).

4. Dispositif selon les revendications 1 à 3 est caractérisé en ce que le système de lentilles (104) est écarté du porte-échantillons (50; 100):

5. Dispositif selon une des revendications 1 à 3 est caractérisé en ce que le système de lentilles (104) est disposé du côté de la face de dessus (58) du porte-échantillons( 50; 100).

6. Le dispositif selon la revendication 5 est caractérisé en ce que le système de lentilles (104) est équipé d'un plateau (120 ) à faces planes et parallèles et transparent à la lumière dont la surface de dessus qui est opposée au porte-échantillons(50; 100) est équipée de lentilles (122).

7. Dispositif selon la revendication 5 est caractérisé en ce que le système de lentilles (104) est équipé d'un plateau (120) à faces planes et parallèles et transparent à la lumière dont la face de dessous qui regarde le porte-échantillons (50; 100) est équipée de lentilles (124).

8. Le dispositif selon la revendication 5 est caractérisé en ce que le système de lentilles (104) est équipé d'un plateau (120) à faces planes et parallèles et transparent à la lumière dont la surface opposée au porte-échantillons (50; 100) ainsi que la surface regardant le porte-échantillons (50; 100) sont chacune équipées de lentilles (122, 124).

9. Le dispositif selon les revendications 1 à 8 est caractérisé en ce que l'axe optique d'une lentille (114, 116; 122, 124) attribuée à un creux (106) ou les axes optiques des lentilles (106) attribuées à un creux déterminés (106) ou leur prolongation ou les prolongations passent par le ou les creux (106).

10. Le dispositif selon les revendications 1 ou 2 est caractérisé en ce que les lentilles (114, 116) du système de lentilles (104) sont intégrées dans les fonds (108) des creux (106).

11. Le dispositif selon les revendications 1 à 10 est caractérisé en ce que l'écart entre les creux voisins (52; 106) est inférieur ou égal à 5 mm.

12. Le dispositif selon les revendications 1 à 11 est caractérisé en ce que le matériau du porte-échantillon (50; 100) est un semi-conducteur des groupes III à VIII des éléments de la classification périodique des éléments, de préférence en silice, ou présente ces semi-conducteurs, notamment le silice, et que les creux (52; 106) sont réalisés par un procédé de lithographie.

13. Le dispositif selon les revendications 1 à 11 est caractérisé en ce que le porte-échantillons (50; 100) est, entièrement ou en partie, en matière plastique et que les creux sont réalisés moyennant la technique LIGA .

14. Le dispositif selon les revendications 1 à 13 est caractérisé en ce que le porte-échantillons (50; 100) a l'aspect d'un disque ou d'un plateau comparable à une pastille.

15. Le dispositif selon les revendications 1 à 14 est caractérisé en ce que plusieurs porte-échantillons (50; 100) sont disposés les uns au-dessus des autres, les fonds (54; 108) des creux (52; 106) d'un porte-échantillons (50; 100) étant bien alignés sur les creux (52; 106) et leurs fonds (54; 108) d'un porte-échantillons voisin (50; 100).

16. Le dispositif selon les revendications 1 à 15 est caractérisé en ce que les creux (52; 106) présentent des surfaces limitées, réalisées dans une matière inerte appropriée à la réaction chimique et/ou biologique respective en question.

17. Le dispositif selon les revendications 1 à 16 est caractérisé en ce que les creux (52; 106) présentent au moins un agent séparateur chromatographique.

18. Le dispositif selon les revendications 1 à 17 est caractérisé en ce que les fonds (54; 108) sont revêtus en partie d'une couche filtrante (64) réalisée dans un matériau semi-transparent afin de pouvoir assurer l'alimentation en rayonnements électromagnétiques, en partie réfléchissants, dont notamment de la lumière.

19. Le dispositif selon la revendication 18 est caractérisé en ce que la couche filtrante (64) est traité par gravure par crépitement.

20. Le dispositif selon les revendications 1 à 19 est caractérisé en ce que les fonds (54; 108) sont chacun recouverts d'une couche filtrante (64) réalisée dans un matériau transparent aux ondes électromagnétiques, dont notamment de la lumière.

21. Le dispositif selon les revendications 1 à 20 est caractérisé en ce que les fonds (54; 108) sont revêtus de couches assurant aussi bien l'intégration des rayonnements électromagnétiques de manière non atténuée, ou bien affaiblie ou encore en réfléchissant une partie, que la pleine intégration des rayonnements, en particulier de la lumière, par des rayonnements partiels.

22. Le dispositif selon les revendications 1 à 21 est caractérisé en ce que sur les surfaces de dessus (58) du porte-échantillons (50; 100) ou en présence de plusieurs porte-échantillons superposés (50; 100), sur le côté supérieur (58) du porte-échantillons supérieur (50; 100) un couvercle (78) est disposé qui, au niveau des creux (52; 106), est pourvu d'orifices (80) dont le diamètre est inférieur à celui des creux (52; 106) aménages dans la surface supérieure (58) du porte-échantillons (50; 100).

23. Le dispositif selon la revendication 22 est caractérisé en ce que le couvercle (78) est relié au porte-échantillons (50; 100) par serrages mécaniques, notamment par ceux qui se desserrent aussi, par collage, par bonding anodique ou par bonding pastille-pastille.

24. Le dispositif selon les revendications 22 ou 23 est caractérisé en ce que le matériau mis en oeuvre pour le couvercle (78) est approprié à la gravure et permet de réaliser les orifices (80) par lithogravure.

25. Le dispositif selon les revendications 22 ou 23 est caractérisé en ce que le couvercle (78) est réalisé, entièrement ou en partie, en matière plastique et que les orifices (80) ont été réalisés par le procédé LIGA.

26. Le dispositif selon les recommandations 1 à 21 ou 22 à 25 est caractérisé en ce que chaque creux (52; 106) du porte-échantillons (50; 100) ou la surface de dessous du couvercle (78) regardant vers le porte-échantillons est équipée au niveau de tous les creux (52; 106), d'un élément de chauffage (82; 95), notamment sous forme d'un élément en couche mince servant de microcorps chauffant, ou d'un thermistor.

27. Le dispositif selon les revendication 1 à 21 ou 22 à 26 est caractérisé en ce que notamment chaque creux (52; 106) ou la surface de dessous du couvercle (78) regardant vers le porte-échantillons (50; 100) au niveau des creux (52; 106) est doté d'électrodes (96, 97) permettant des transformations électrochimiques locales et/ou le tri des molécules.

28. Le dispositif selon les revendications 1 à 21 ou 22 à 27 est caractérisé en ce que notamment chaque creux (52; 106) ou la surface de dessous du couvercle (76) regardant le porte-échantillons est équipé au niveau des creux d'électrodes (96, 97) permettant d'effectuer des mesures microcapacitives et/ou l'application d'intensités du champ à base d'un dynamisme moléculaire.

29. Le dispositif selon les revendications 1 à 28 est caractérisé en ce que chaque creux (52; 106) et notamment chaque fond (54; 108) est équipé d'un élément de chauffage électrique (82), notamment d'un élément à couche mince servant de corps chauffant et étant intégré dans le fond (54; 108).

30. Le dispositif selon la revendication 21 est caractérisé en ce que le matériau utilisé pour l'élément de chauffage (82) forme une couche de réflexion à moitié perméable.

31. Le dispositif selon les revendication 1 à 30 est caractérisé en ce que chaque creux (52; 106) et notamment chaque fond de creux (54; 108) est équipé d'un élément de chauffage électrique intégré (82), notamment sous forme d'un élément à couche mince servant de corps chauffant, et en plus d'un autre élément de chauffage électrique intégré (84), notamment d'une résistance série.

32. Le dispositif selon les revendications 1 à 31 est caractérisé en ce que chaque creux (52; 106) et notamment chaque fond (54; 108) est couplé à un guide d'ondes lumineuses (88) dont une des extrémités est reliée par un élément de couplage (90) à une partie transparente du fond de creux, permettant la transmission par le guide d'ondes lumineuses de rayonnement électromagnétique.

33. Le dispositif selon les revendications 1 à 32 est caractérisé en ce que chaque creux (52; 106) est doté d'au moins un détecteur (94) destiné à mesurer un paramètre de réaction, notamment dans le but de mesurer le pH et/ou le CO₂, ou qu'à chaque creux (52; 106) correspond au moins un de ces détecteurs (94).

34. Le dispositif selon les revendications 1 à 33 est caractérisé en ce que les fonds (54; 108) des creux (52; 106) sont, au moins en partie, poreux pour permettre la réalisation des passages entre la surface supérieure et la surface inférieure du porte-échantillons (50; 100).

35. Le dispositif selon la revendication 34 est caractérisé en ce que chaque fond (54; 108) comprend une zone imperméable (92) et une zone poreuse associée disposée l'une à côté de l'autre.
